(19) Europäisches Patentamt
European Patent Office
Office européen des brevets

(11) **EP 1 046 108 B1**

(12) **FASCICULE DE BREVET EUROPEEN**

(45) Date de publication et mention
de la délivrance du brevet:
**31.10.2007 Bulletin 2007/44**

(21) Numéro de dépôt: **99970483.6**

(22) Date de dépôt: **07.10.1999**

(51) Int Cl.:
***G06F 9/46*** *(2006.01)*

(86) Numéro de dépôt international:
**PCT/FR1999/002404**

(87) Numéro de publication internationale:
**WO 2000/022525 (20.04.2000 Gazette 2000/16)**

(54) **PROCEDE METTANT EN OEUVRE UN PROTOCOLE D'ECHANGE INTERNE DE DONNEES ENTRE APPLICATIONS D'UN OBJET PORTATIF MULTI-APPLICATIONS ET OBJET PORTATIF MULTI-APPLICATIONS CORRESPONDANT**

VERFAHREN FÜR INTERNES DATENAUSTAUSCH ZWISCHEN APPLIKATIONEN VON ENTSPRECHENDEN TRAGBAREN MULTIAPPLIKATIONSOBJEKTEN

INTERNAL DATA EXCHANGE METHOD BETWEEN APPLICATIONS OF A MULTI-APPLICATION PORTABLE OBJECT AND CORRESPONDING PORTABLE MULTI-APPLICATION OBJECT

(84) Etats contractants désignés:
**AT BE CH CY DE DK ES FI FR GB GR IE IT LI LU MC NL PT SE**

(30) Priorité: **09.10.1998 FR 9812650**

(43) Date de publication de la demande:
**25.10.2000 Bulletin 2000/43**

(73) Titulaire: **CP8 TECHNOLOGIES**
**78431 Louveciennes (FR)**

(72) Inventeurs:
• **GELGON, Sébastien**
**F-78190 Bois d'Arcy (FR)**
• **OVERT, Stéphane**
**F-78640 Beynes (FR)**

(74) Mandataire: **Cassagne, Philippe M.J. et al**
**Axalto SA**
**IP & Licensing Department**
**Bat 4-507**
**6, rue de la Verrière**
**92197 Meudon Cedex (FR)**

(56) Documents cités:
**GB-A- 2 305 270**

• **DAVE A ET AL: "PROXIES, APPLICATION INTERFACES, AND DISTRIBUTED SYSTEMS" PROCEEDINGS INTERNATIONAL WORKSHOP ON OBJECT ORIENTATION IN OPERATING SYSTEMS, 1 janvier 1992 (1992-01-01), pages 212-220, XP002004311**

**EP 1 046 108 B1**

**Description**

Les objets portatifs permettant le traitement de l'information, tels que les cartes à microprocesseur actuelles, sont utilisés dans de nombreux domaines.

Afin d'éviter une multiplication pléthorique du nombre de ces objets portatifs par utilisateur, les constructeurs ont mis en oeuvre des systèmes d'exploitation dits multi-applications, dans lesquels une gestion des données destinées à des usages différents est réalisée. A titre d'exemple, on indique que les applications de santé, d'accès à un local donné ou de prêt d'ouvrages dans une bibliothèque peuvent être gérées par un même système d'exploitation.

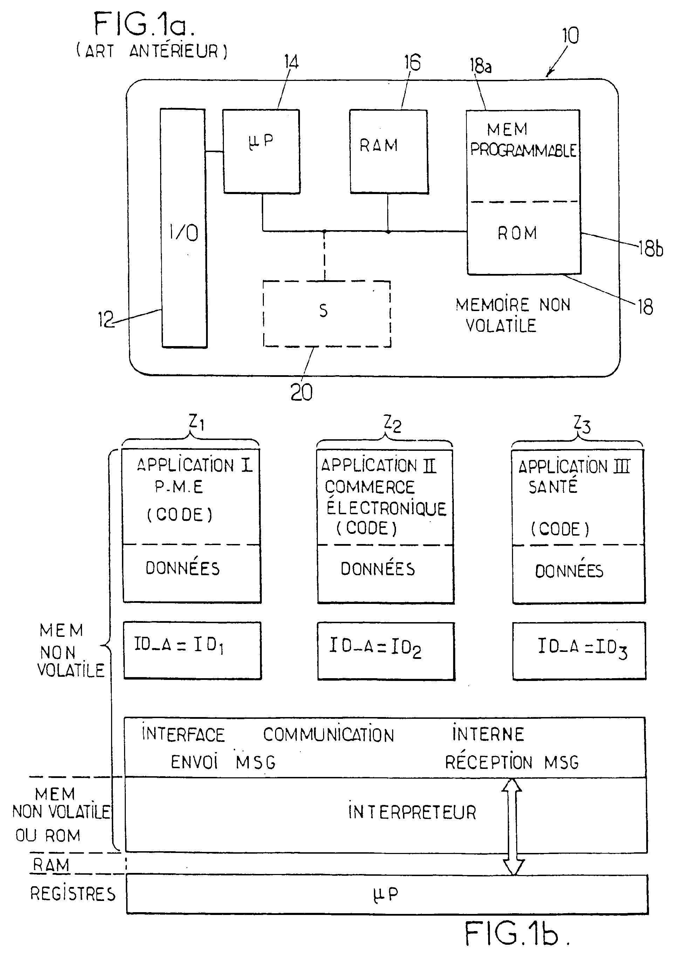

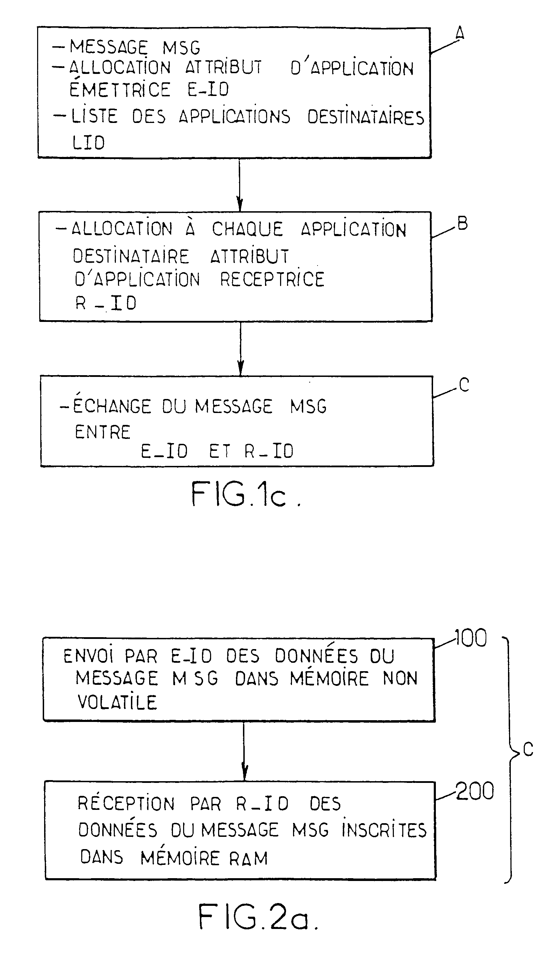

D'une manière générale, ces objets portatifs comprennent plusieurs types de mémoires. La mémoire accessible uniquement en lecture, mémoire ROM, contient le système d'exploitation, alors que la mémoire programmable contient des données traitées par ce dernier. Les zones mémoires contenant ces données sont bien distinctes et le système d'exploitation gère les accès à ces zones en fonction des seules conditions d'accès définies au sein de chaque application. Le schéma fonctionnel d'un objet portatif constitué par une carte à microprocesseur est représenté en figure 1a.

Un tel mode opératoire n'est plus possible dès lors que l'objet ou la carte doit exécuter des fonctions complexes et uniquement réservées à une application spécifique, telle que par exemple l'application porte-monnaie électronique, désignée par application PME, le péage autoroutier, ou encore certains services de commerce électronique, tel que l'achat de produits ou marchandises par correspondance.

Une solution, dans une telle situation, consiste alors à télécharger le programme applicatif dans la mémoire programmable de la carte. Ce programme applicatif peut être développé, soit en langage assembleur - il est alors directement exécutable par le microprocesseur -, soit en langage évolué, auquel cas il est écrit dans la mémoire de la carte sous forme compressée puis exécuté par un interpréteur, lequel traduit le programme téléchargé en instructions exécutables par le microprocesseur. Cette solution permet d'élaborer des programmes dans un langage universel quel que soit le microprocesseur équipant la carte.

La mémoire non volatile de la carte est conçue pour recevoir des programmes d'application d'origines différentes. Ces programmes peuvent être exécutés indépendamment les uns des autres et disposent, à cet effet, de zones mémoires qui leur sont réservées. Dans certains cas spécifiques, ces programmes doivent communiquer des données communes entre eux. Par exemple, une application de commerce électronique peut utiliser une application PME, résidente dans la mémoire de la carte, pour réaliser une ou plusieurs transactions.

Le passage des données communes peut, dans un mode de mise en oeuvre de l'art antérieur décrit dans la demande de brevet européen déposée sous le numéro 98933716.7, être effectué à partir d'un fichier-lien permettant le transfert des données communes échangées.

Le procédé, objet de la demande de brevet précitée, décrit un processus irréversible et permanent permettant de communiquer un ensemble de données formatées et constituées en fichier, pour l'application considérée, cet ensemble de données étant, de ce fait, indivisible.

De telles données correspondent donc essentiellement à des données de travail d'une application considérée, ces données de travail étant simplement partagées par plusieurs applications indépendamment de la mise en oeuvre de ces applications. Un tel mode opératoire, satisfaisant, ne permet toutefois pas la mise en oeuvre d'un processus d'échange dynamique d'informations entre une ou plusieurs applications réceptrices.

En outre, les fichiers partagés sont formatés en fonction de ces applications et peuvent donc être lus ou utilisés par tout système externe compatible avec ces dernières. Il en résulte une réduction du niveau de sécurité de l'ensemble lié à l'absence d'indépendance ou d'étanchéité entre applications.

Il est connu par ailleurs le document "PROXIES, APPLICATION INTERFACES, AND DISTRIBUTED SYSTEMS" PROCEEDINGS INTERNATIONAL WORKSHOP ON OBJECT ORIENTATION IN OPERATING SYSTEMS, (1992-01-01, réf. : XP002004311) qui divulgue l'utilisation de proxy et de proxys distants pour permettre à des applications d'accéder mutuellement à leurs fonctionnalités et à leurs données. Les proxy permettent un accès à des données protégées.

La présente invention a pour objet de remédier aux inconvénients des procédés de l'art antérieur afin de permettre, notamment, un échange ponctuel d'informations élémentaires, sous forme de messages d'information échangés entre une application émettrice et une ou plusieurs applications réceptrices implantées dans la mémoire non volatile d'un objet portatif, telle qu'une carte à microprocesseur.

Un autre objet de la présente invention est en particulier la mise en oeuvre d'un protocole d'échange de manière interne d'informations entre applications d'un objet portatif telle qu'une carte à microprocesseur, cet échange dynamique étant effectué sous forme de messages successifs entre les applications contenues dans cette carte.

Un autre objet de la présente invention est également la mise en oeuvre d'un protocole d'échange interne d'informations entre applications d'une carte à microprocesseur permettant d'assurer un niveau important de sécurité en garantissant la confidentialité et l'authenticité de ces messages.

Un autre objet de la présente invention est enfin la mise en oeuvre d'un protocole d'échange interne d'informations entre applications d'un objet portatif multi-applications tel qu'une carte à microprocesseur, permettant de pré-

2

server l'indépendance ou étanchéité entre les applications de ce dernier, en raison, notamment, du caractère non abouti des informations temporaires véhiculées par chaque message échangé ponctuellement entre applications, contrairement aux informations véhiculées par les fichiers échangés par les applications des systèmes de l'art antérieur.

En conséquence, la présente invention fournit un protocole d'échange interne d'informations dans un objet portatif multi-applications muni de ressources de traitement de l'information, d'une mémoire de travail et d'une mémoire non volatile reliées à ces ressources de traitement de l'information, un système d'exploitation étant implanté en mémoire non volatile. Cette mémoire non volatile comporte une zone mémoire spécifique à chaque application, chaque zone mémoire spécifique étant subdivisée en une zone mémoire spécifique de données, une zone mémoire spécifique d'instructions et une zone mémoire spécifique d'identification, relatives à cette application.

Ce protocole d'échange interne d'informations entre ces applications consiste au moins, à partir d'une interface de communication interne munie d'au moins une commande d'envoi de message et une commande de réception de message, résidentes dans la mémoire non volatile, à allouer à une première application, par l'intermédiaire d'un attribut d'identification de cette première application, un attribut d'application émettrice, sur requête d'envoi, par cette première application, d'un message d'information vers une ou plusieurs autres applications, et à allouer à au moins une deuxième application, distincte de cette première application, par l'intermédiaire d'un attribut d'identification de cette deuxième application, un attribut d'application réceptrice, sur requête d'envoi par la première application d'un message d'information vers cette deuxième application. L'échange du message d'information entre la première et la deuxième application est effectué par envoi, par la première application, puis réception, par la deuxième application, du message d'information, grâce à la mise en oeuvre de l'interface de communication utilisée comme intermédiaire.

Le protocole, objet de la présente invention, permet d'assurer un échange d'informations entre ces applications tout en supprimant sensiblement le risque d'interaction entre ces applications.

Il sera mieux compris à la lecture de la description et à l'observation des dessins ci-après, introduits à titre de seul exemple, et dans lesquels, outre la figure 1a, relative à un objet portatif tel qu'une carte à microprocesseur de l'art antérieur,

- la figure 1b représente une topographie de la mémoire non volatile, programmable, d'un objet portatif multi-applications permettant la mise en oeuvre du protocole, objet de la présente invention ;
- la figure 1c représente un organigramme général illustratif des étapes permettant la mise en oeuvre du protocole, objet de la présente invention ;
- la figure 2a représente un organigramme général illustratif de l'étape d'échange d'un message d'information du protocole, objet de la présente invention, tel que représenté en figure 1c ;
- les figures 2b à 2d représentent une variante de mise en oeuvre de l'étape d'échange d'un message d'information, telle qu'illustrée en figures 1c et 2a, dans le cas, non limitatif, où une procédure de transmission d'accusé de réception de message d'information d'une application réceptrice à l'application émettrice est introduite ;
- les figures 3a à 3c représentent une structure de message d'information plus particulièrement adaptée à la mise en oeuvre du protocole, objet de la présente invention, dans un mode de réalisation particulier, non limitatif ;
- les figures 3d et 3e représentent un organigramme détaillé des procédures d'envoi, respectivement de réception, de messages d'information, conformément au protocole, objet de la présente invention, dans un mode de réalisation particulier non limitatif dans lequel les messages d'information présentent la structure représentée en figures 3a à 3c ;
- la figure 3f représente un organigramme relatif à une procédure de transmission à l'application émettrice d'un message d'acquittement en réception d'un message d'information donné, dans un mode de réalisation spécifique non limitatif ;
- les figures 4a et 4b sont relatives à une réalisation spécifique d'une procédure d'installation-désinstallation permettant d'allouer à une application un attribut d'application émettrice et aux autres applications un attribut d'application réceptrice ;
- la figure 4c représente un organigramme spécifique d'un processus d'installation mis en oeuvre en liaison avec la procédure d'installation-désinstallation représentée en figures 4a et 4b ;
- la figure 4d représente un organigramme spécifique d'un processus de désinstallation mis en oeuvre en liaison avec la procédure d'installation-désinstallation représentée en figures 4a et 4b ;
- les figures 5a à 5c sont relatives à un exemple illustratif de mode opératoire de l'interface de communication interne selon le protocole, objet de la présente invention.

Une description plus détaillée du protocole d'échange interne de données entre applications d'un objet portatif multi-applications, conforme à l'objet de la présente invention, sera maintenant donnée en liaison avec les figures 1a à 1c et suivantes.

D'une manière générale, on rappelle que le protocole, objet de la présente invention, peut être mis en oeuvre dans tout objet portatif multi-applications muni de ressources de traitement de l'information et d'échange d'informations avec un terminal extérieur.

Afin de simplifier la description, l'objet portatif permettant la mise en oeuvre d'un tel protocole sera présenté et décrit comme une carte à microprocesseur, telle que représentée en figure 1a, cette carte présentant l'aspect d'une carte bancaire, de manière non limitative. En particulier, tout autre type de carte telle qu'une carte au standard PCMCIA par exemple, ne sort pas du cadre de l'objet de la présente invention.

En référence à la figure 1a, on rappelle que l'objet portatif, constitué par une carte à microprocesseur et référencé 10, comprend, de manière classique, des circuits d'entrée/sortie, notés I/O et référencés 12, permettant de communiquer avec un terminal tel qu'un terminal de transaction bancaire par exemple, des ressources de traitement de l'information, référencées 14, constituées par un microprocesseur ou un microcontrôleur, ces ressources de traitement de l'information étant reliées aux circuits d'entrée/sortie 12. En outre, une mémoire non volatile 18 est prévue, laquelle consiste en une mémoire programmable $18_a$ et en une mémoire de type ROM, ou mémoire de type à accès en lecture seulement $18_b$. Ces deux mémoires sont reliées au microprocesseur 14. Enfin, une mémoire de type mémoire de travail, mémoire RAM, portant la référence 16, est également reliée au microprocesseur 14. Les liaisons précitées s'entendent d'une liaison par BUS de type classique.

Un système d'exploitation OS est prévu, lequel peut être implanté en mémoire non volatile 18.

Enfin, et dans certains cas seulement, l'objet portatif multi-applications peut comporter, ainsi que représenté en figure 1a, une unité de calcul de chiffrement/déchiffrement S, portant la référence 20, elle-même reliée au microprocesseur 14.

Les éléments structurels de l'objet portatif multi-applications, objet de la présente invention, ne seront pas décrits plus en détail car ils correspondent à des éléments connus de l'état de la technique.

Dans une variante, le microprocesseur est remplacé - ou tout du moins complété - par des circuits logiques implantés dans une puce à semi-conducteurs. En effet, de tels circuits sont aptes à effectuer des calculs, notamment d'authentification et de signature, grâce à de l'électronique câblée, et non microprogrammée. Ils peuvent notamment être de type ASIC (de l'anglais « Application Specific Integrated Circuit »).

Afin de permettre la mise en oeuvre du protocole, objet de la présente invention, une topographie spécifique de la mémoire à accès direct, en particulier de la mémoire non volatile programmable $18_a$ par exemple, sera décrite en liaison avec la figure 1b.

Ainsi que représenté sur la figure précitée, la mémoire programmable $18_a$ comporte une zone mémoire spécifique à chaque application, ces zones mémoires étant notées $Z_1$, $Z_2$, $Z_3$ sur la figure 1b pour chaque application considérée.

Chaque zone mémoire spécifique $Z_1$ à $Z_3$ est subdivisée en une zone mémoire spécifique de données et une zone mémoire spécifique d'instructions relatives à l'application considérée, ainsi qu'en une zone spécifique d'identification destinée à recevoir un attribut d'identification de cette application. Sur la figure 1b, les attributs d'identification sont notés $ID_1$ à $ID_3$ et référencés ID-A.

Enfin, la mémoire non volatile $18_a$ comprend une zone mémoire spécifique dans laquelle est implantée une interface de communication interne, cette interface consistant en un code objet comportant au moins une commande d'envoi de message d'information et une commande de réception de message d'information. Le code objet précité et les commandes d'envoi et de réception de message sont résidents dans la mémoire non volatile, selon un aspect remarquable de la mise en oeuvre du protocole objet de la présente invention.

Enfin, et de manière non limitative, un interpréteur d'instructions peut avantageusement être implanté en mémoire non volatile 18, de façon à permettre la transformation de l'ensemble des commandes d'applications en un ensemble d'instructions directement exécutable par le microprocesseur 14.

Sur la figure 1b on a représenté l'interfaçage entre l'interpréteur implanté en mémoire non volatile réalisé par l'intermédiaire de la mémoire de travail RAM 16 de manière purement illustrative, les commandes interprétées pouvant être mémorisées dans la mémoire de travail pour accès réciproque entre le microprocesseur 14 et l'interface de communication interne implanté en mémoire non volatile 18.

Ainsi qu'on l'a représenté en outre en figure 1c, le protocole, objet de la présente invention, consiste à allouer à une première application, par l'intermédiaire d'un attribut d'identification ID-A de cette première application, tel que par exemple l'attribut d'identification $ID_1$ à $ID_3$ précité, un attribut d'application émettrice sur requête d'envoi par cette première application d'un message d'information, noté MSG, vers une ou plusieurs autres applications. Par message d'information, on entend, conformément à un aspect remarquable du protocole, objet de la présente invention, un message de données ou d'instructions, les données contenues dans ce message étant représentatives, après concaténation avec des données de même nature, soit de données pures, soit de données destinées à constituer des instructions directement exécutables par le microprocesseur 14 ou grâce à l'interpréteur. L'étape d'allocation à la première application considérée porte la référence A sur la figure 1c.

De même, suite à l'étape A précitée, le protocole, objet de la présente invention, consiste à allouer à au moins une deuxième application, distincte de cette première application à laquelle un attribut d'application émettrice a été alloué à l'étape A, un attribut d'application réceptrice sur requête d'envoi par la première application d'un message d'information vers cette deuxième application. L'étape d'allocation à la deuxième application de l'attribut d'application réceptrice est notée B sur la figure 1c et les attributs d'applications émettrice, alloué à l'étape 1a, et réceptrice, alloué à l'étape B, sont notés E-ID et R-ID respectivement.

En ce qui concerne le processus d'allocation d'un attribut d'application émettrice et d'un attribut d'application réceptrice, on indique que ce processus peut, à titre d'exemple non limitatif, être réalisé par constitution d'un vecteur d'état représentatif des paramètres essentiels permettant la mise en oeuvre du protocole, objet de la présente invention, ce vecteur d'état comportant un nombre déterminé de champs correspondants dans lesquels ces paramètres sont inscrits. Ce vecteur d'état peut être un vecteur réel, lequel peut être mémorisé par exemple en mémoire non volatile 18 et réactualisé à chaque modification de l'un des paramètres d'état de ce dernier ou un vecteur dit virtuel consistant à mémoriser par des pointeurs l'adresse des paramètres correspondants.

On indique que dans la mise en oeuvre du protocole, objet de la présente invention, le vecteur d'état est un vecteur d'état réel mais que, selon un mode de réalisation préférentiel, ce vecteur d'état, limité à des paramètres spécifiques de mise en oeuvre du protocole, ainsi qu'il sera décrit ultérieurement dans la description, est avantageusement associé aux données du message pour constituer un message d'information correspondant MSG.

En d'autres termes, quel que soit le mode de gestion de l'état du protocole, objet de la présente invention, on indique que le processus d'allocation des attributs d'application émettrice ou réceptrice peut, de ce fait, consister en l'inscription de l'attribut d'identification de la première ou des deuxièmes applications concernées dans le champ correspondant, l'allocation d'attribut d'application émettrice, respectivement réceptrice, résultant alors du fait de l'inscription de cet attribut d'identification dans le champ adéquat et d'opérations mises en oeuvre dans un processus d'installation-désinstallation de ces applications, lequel sera décrit en détail ultérieurement dans la description.

Enfin, les étapes A et B de la figure 1c sont suivies d'une étape C d'échange du message d'information MSG ainsi constitué entre la première et la deuxième application, c'est-à-dire ainsi que mentionné sur la figure précitée, entre application émettrice E-ID et chaque application réceptrice successivement, ou application destinataire, notée application R-ID.

Le processus d'échange est effectué par envoi, par la première application, puis réception, par chaque deuxième application, du message d'information MSG grâce à la mise en oeuvre de l'interface de communication utilisée comme intermédiaire.

D'une manière générale, l'étape d'échange C, ainsi que représenté en figure 2a, peut consister en une étape d'envoi, notée 100, à partir de l'application émettrice E-ID du message d'information MSG dans une zone mémoire de la mémoire non volatile 18 par l'intermédiaire de la commande d'envoi de message précédemment citée. On comprend en particulier que l'envoi du message MSG dans la mémoire non volatile 18 est effectué par l'intermédiaire d'opérations de traitement successives, destinées à vérifier l'opération d'inscription des données du message MSG dans cette mémoire, puis de l'inscription de ce message MSG en mémoire non volatile 18, conditionnellement au succès des opérations de traitement précitées. De la même manière, on comprend que l'étape d'échange consiste en outre en une étape de réception, notée 200, à partir de l'application réceptrice R-ID, des données du message d'information MSG, cette étape de réception consistant en une série d'étapes de traitement destinées à vérifier l'exécution d'une lecture dans la zone mémoire de la mémoire non volatile 18 précitée, par l'intermédiaire de la commande de réception de messages de l'interface de communication interne implantée en mémoire non volatile 18. On comprend ainsi que l'étape d'échange précitée est bien réalisée grâce à l'interface de communication utilisée comme intermédiaire, les données utilisables par toute application réceptrice R-ID ayant de ce fait été contrôlées et soumises au traitement de l'interface de communication interne précitée.

Pour la mise en oeuvre des étapes d'envoi et de réception constitutives de l'étape d'échange de messages d'information, conformément au protocole, objet de la présente invention, dans une version de base, les messages d'information MSG peuvent comporter uniquement un champ relatif aux données échangées entre les applications émettrice et réceptrice, un champ relatif au nombre d'octets constitutifs du champ relatif à ces données échangées et au moins un champ relatif à l'identifiant, ou attribut d'identification, d'une application réceptrice.

Dans ces conditions, l'étape d'envoi par l'application E-ID des données du message dans la mémoire non volatile à l'étape 100 de la figure 2a peut consister en une instruction d'écriture, à partir de l'application émettrice E-ID, du message d'information MSG dans une zone mémoire de la mémoire non volatile 18 précitée. A cette instruction d'écriture est en outre associé un appel par l'application émettrice E-ID de la commande d'envoi de message de l'interface de communication de la mémoire programmable, cet appel ayant pour effet la transmission par l'interface de communication à l'application émettrice E-ID d'un message d'acquittement d'émission.

De la même manière, et dans les mêmes conditions, l'étape de réception peut consister au moins en un appel par l'application réceptrice R-ID de la commande de lecture de message de l'interface de communication de la mémoire non volatile. Les conditions d'activation de l'application réceptrice pour effectuer l'appel précité seront données ultérieurement dans la description.

Le mode opératoire relatif aux étapes d'envoi et de réception des messages d'information précitées, tel que décrit en liaison avec la figure 2a, donne satisfaction et permet la transmission d'un message d'information d'une application émettrice donnée à une pluralité d'applications réceptrices de manière unidirectionnelle. On comprend en effet qu'en raison de la structure des messages d'information précités, le champ relatif à au moins un attribut d'identification d'une application réceptrice dans chaque message étant en fait constitué par une liste d'attributs d'identification d'application réceptrice ; il est alors possible, à partir d'une telle liste, l'application réceptrice étant rendue active, d'effectuer à partir de toute application réceptrice une lecture systématique, dans la zone mémoire non volatile appropriée, du message d'information considéré.

Toutefois, le protocole, objet de la présente invention, peut être rendu beaucoup plus souple en ce qui concerne le processus d'échange des messages d'information entre applications.

Dans ce but, et conformément à un aspect non limitatif avantageux de ce dernier, une procédure ou étape de transmission à l'application émettrice E-ID par l'intermédiaire de l'interface de communication d'un message d'acquittement en réception du message d'information MSG par l'application réceptrice, peut également être prévue.

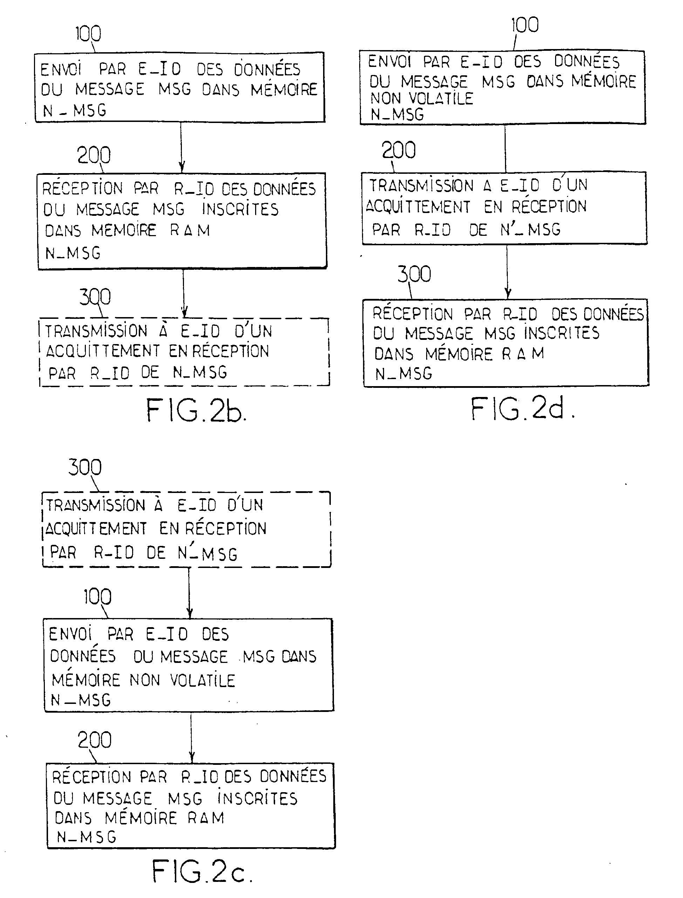

Une telle procédure est illustrée en figures 2b à 2d dans un mode de réalisation non limitatif.

De préférence, et dans ce but, la structure de messages d'information MSG peut être modifiée de façon à introduire dans chacun des messages d'information transitant par l'intermédiaire de l'interface de communication interne un numéro d'identification de message, ce numéro d'identification étant ajouté dans un champ du message d'information, ainsi qu'il sera décrit ultérieurement dans la description.

De préférence, la gestion du numéro de message, noté N-MSG, est effectuée par l'interface de communication interne, indépendamment de l'application émettrice et/ou réceptrice considérée.

Dans ce but, l'interface de communication interne peut avantageusement être munie d'une routine de comptage du nombre de messages engendrés au cours d'une session d'utilisation de l'objet portatif multi-applications. A titre d'exemple non limitatif, le compteur peut délivrer une valeur de numéro de message comprise entre 1 et 65 532 par exemple, le numéro de message étant incrémenté dès la transmission d'un nouveau message par l'intermédiaire du compteur de l'interface de communication interne. A titre d'exemple non limitatif, on indique que le compteur précité est mis à jour par l'interface de communication interne et incrémenté chaque fois qu'une application émettrice émet un message. Lors de l'utilisation d'une application, le compteur revient à sa valeur initiale 1 lors de l'atteinte de la valeur maximale de comptage. La valeur zéro allouée à un numéro de message N-MSG peut être particulière et réservée à des messages MSG destinés à des applications non reconnues par l'interface de communication interne.

Selon un premier mode de mise en oeuvre de l'étape de transmission à l'application émettrice E-ID d'un message d'acquittement en réception du message d'information MSG, on indique, en référence à la figure 2b, que la transmission de ce message d'acquittement en réception intervient postérieurement aux étapes A et B d'allocation d'un attribut d'application émettrice, respectivement réceptrice, mais postérieurement à l'étape 100 d'envoi par l'application E-ID des données du message MSG auquel est associé un numéro de message N-MSG dans la mémoire non volatile et à l'étape 200 de réception par l'application réceptrice R-ID des données du message MSG inscrites dans cette mémoire non volatile.

Dans ces conditions, ainsi que représenté en figure 2b, l'étape de transmission du message d'acquittement en réception par l'application réceptrice R-ID du message MSG de numéro d'identification N-MSG intervient postérieurement aux deux étapes précitées 100 et 200 et constitue en fait une simple vérification de la réception du dernier message d'information transmis de l'application émettrice E-ID à l'application réceptrice considérée R-ID.

Toutefois, l'étape de transmission à l'application émettrice E-ID du message d'acquittement en réception peut également être mise en oeuvre postérieurement ou encore pendant l'étape d'échange du message d'information entre application émettrice et application réceptrice, c'est-à-dire, ainsi que représenté en figures 2c et 2d, antérieurement à l'étape 100 d'envoi par l'application E-ID des données du message MSG et de l'étape 200 correspondante de réception par l'application R-ID du message MSG précité ou, ainsi que représenté en figure 2d, entre les étapes 100 d'envoi et 200 de réception précédemment mentionnées.

Dans les deux cas représentés en figures 2c et 2d, on indique que, conformément à un aspect particulièrement avantageux du protocole, objet de la présente invention, l'étape de transmission à l'application émettrice E-ID du message d'acquittement en réception concerne, non pas le message MSG de numéro d'identification N-MSG envoyé à l'étape 100, mais qui n'a pas encore été reçu à l'étape 200 ultérieure par l'application réceptrice considérée R-ID, mais bien entendu un message MSG de numéro d'identification N'-MSG différent, et bien entendu d'ordre antérieur au message MSG de numéro N-MSG précité.

On comprend dans ces conditions que l'allocation d'un attribut d'identification de message spécifique constituant un numéro d'ordre de message permet alors d'assurer une gestion complète du processus de transmission/réception de ces messages d'information par chaque application destinataire et, en particulier, d'assurer une gestion complète du processus d'échange de données ou d'informations entre applications d'un objet portatif multi-applications, entre des sessions distinctes d'utilisation de cet objet portatif multi-applications.

En particulier, il est ainsi possible, pour une transaction réalisée à une date donnée, d'effectuer des vérifications relatives à cette transaction à une date ultérieure par simple vérification de la réception des messages de numéro d'identification correspondants relatifs à l'application réceptrice considérée.

Afin de rendre l'étape de transmission à l'application émettrice E-ID d'un message d'acquittement en réception par l'application réceptrice R-ID considérée sensiblement indépendante de l'application émettrice E-ID, cette opération peut être réalisée par l'appel, par l'application émettrice E-ID, d'une primitive permettant d'assurer la transmission du message d'acquittement vers l'application émettrice E-ID correspondante.

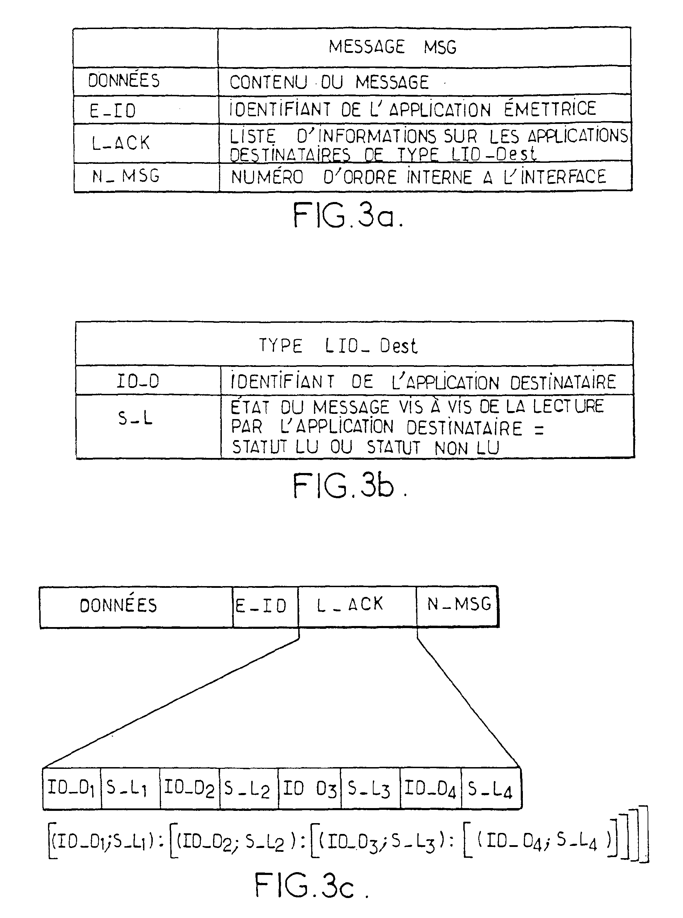

Un mode de réalisation préférentiel de l'étape d'envoi et de l'étape de réception de chaque message d'information MSG sera maintenant décrit en liaison avec les figures 3a à 3c relatives à une structure spécifique des messages MSG précités permettant, de manière particulièrement avantageuse, la mise en oeuvre des procédures d'envoi et de réception précédemment citées.

Dans ce mode de réalisation préférentiel, on indique, en référence à la figure 3a, que chaque message MSG comporte un champ de données, qui n'est autre que le contenu du message, ainsi que mentionné précédemment dans la description, un champ d'attribut d'application émettrice E-ID identifiant en fait l'application émettrice, un champ d'application réceptrice consistant en fait en une liste d'informations sur les applications destinataires ou réceptrices, et enfin un champ de numéro de message N-MSG constituant en fait un numéro d'ordre de chaque message délivré par l'interface de communication interne dans les conditions précédemment mentionnées dans la description.

En ce qui concerne la liste d'informations sur les applications destinataires, cette liste étant désignée par LID-Dest, celle-ci peut comprendre avantageusement, ainsi que représenté en figure 3b, pour chaque application destinataire considérée, un identifiant, ou attribut d'identification, ID-D, noté $ID-D_1$ à $ID-D_4$, de l'application destinataire considérée auquel est ajouté un mot de statut du message S-L, noté $S-L_1$ à $S-L_4$, vis-à-vis de la lecture par l'application destinataire considérée, ce mot de statut constituant en fait un descriptif de l'état lu ou non lu du message d'information MSG de numéro d'ordre N-MSG considéré par l'application destinataire correspondante.

Ainsi que représenté en figure 3c, chaque message MSG comprend, dans la liste d'information sur les applications destinataires LID-Dest des valeurs successives représentatives de l'attribut d'identification de chaque application destinataire et du statut lu ou non lu du message correspondant pour l'application destinataire considérée. Ces valeurs successives correspondent alors à des éléments de liste, les éléments de liste correspondants étant mentionnés en figure 3c conformément à la notation des listes habituellement utilisée dans les langages de programmation déclaratifs habituels. Ainsi, chaque élément de liste ou terme de liste est formé par un argument d'attribut d'identification $ID-D_1$ à $ID-D_4$ sur la figure 3c, représentatif de l'application réceptrice R-ID et d'un argument de statut de lecture $S-L_1$ à $S-L_4$ correspondant, représentatif de l'état du message MSG vis-à-vis de l'application réceptrice correspondante.

La gestion d'une telle liste peut alors être effectuée conformément à la gestion classique de ces listes dans les langages précités, notamment par une lecture de l'élément de liste de tête, le reste de la liste étant considéré comme une queue de liste, et ainsi de suite successivement, cette gestion étant assurée au moyen de pointeurs appropriés de manière classique.

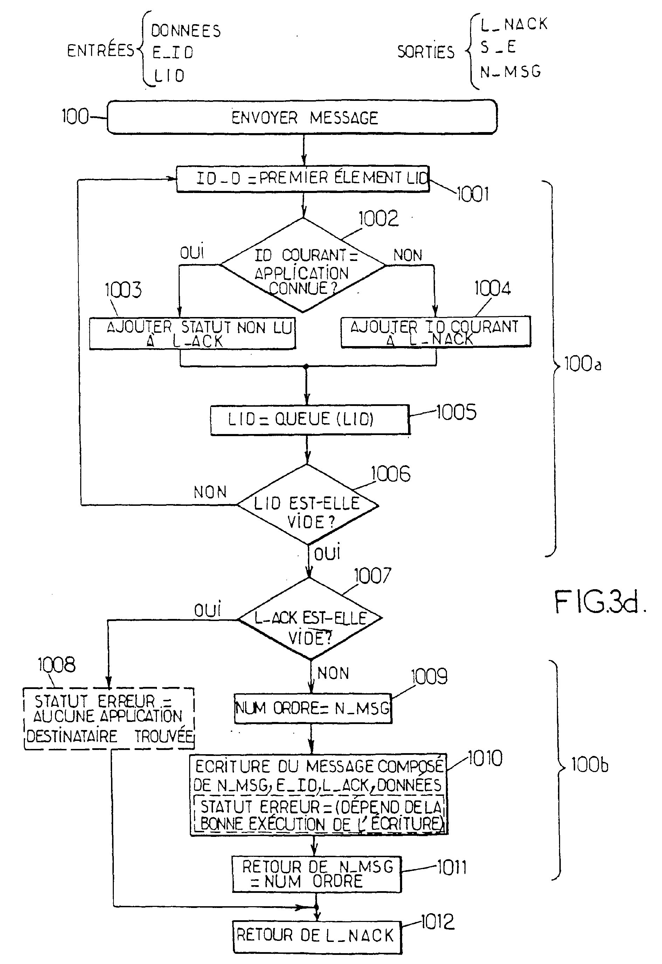

Dans ces conditions, un mode de réalisation préférentiel de la procédure d'envoi de messages 100 peut alors consister en les différentes étapes successives, tel que représenté en figure 3d.

Cette procédure d'envoi de messages MSG est mise en oeuvre au niveau de l'application émettrice E-ID. Les paramètres d'entrée sont alors bien entendu le contenu du message établi par l'application émettrice, l'attribut d'identification de cette application émettrice E-ID, et enfin la liste des identifiants des applications destinataires, ou réceptrices, notée LID. On comprend bien entendu que la liste précitée peut être engendrée par l'application émettrice E-ID en fonction des nécessités de cette dernière, c'est-à-dire des différentes applications réceptrices qui doivent être atteintes par le message d'information MSG contenant les données précitées.

La procédure d'envoi de messages telle que représentée en figure 3d, permet, grâce à une mise en oeuvre spécifique, l'établissement de paramètres d'état tels que, en particulier, une liste des attributs d'identification des applications absentes, ces applications absentes correspondant à des applications qui ne sont pas actives ou ne sont pas connues de l'interface de communication interne permettant la mise en oeuvre du protocole, objet de la présente invention. Cette liste est notée L-NACK. Les paramètres de sortie comportent également un statut d'erreur S-E, ce statut d'erreur correspondant à différents codes d'erreur retournés au niveau de la mémoire de travail RAM par exemple, pour utilisation par les applications concernées ou, le cas échéant, par le système d'exploitation lui-même.

Dans ces conditions, ainsi que représenté en figure 3d, la procédure ou étape d'envoi de messages 100 peut comporter avantageusement une sous-étape $100_a$ de gestion de la présence des applications réceptrices, cette sous-étape $100_a$ permettant, de manière particulièrement avantageuse, d'engendrer deux listes, une première liste notée L-ACK, du même type que la liste d'information des applications destinataires LID-Dest et une liste notée L-NACK constituée par une liste des attributs d'identification des applications inconnues de l'interface de communication interne précitée. Dans un mode de réalisation spécifique, la liste L-ACK correspond à la liste des applications destinataires LID-Dest reconnues par l'interface de communication interne au format tel que représenté en figure 3c et la liste L-NACK est au format d'une simple liste d'attributs d'identification des applications non reconnues par l'interface de communication. Dans la liste L-ACK, les mots de statut $S-L_1$ à $S-L_4$ sont initialisés à la valeur statut non lu arbitraire.

Par application connue de l'interface de communication interne, on entend toute application normalement installée et implantée en mémoire non volatile de l'objet portatif multi-applications et capable, sous contrôle du système d'exploitation OS, d'opérer les fonctions qui lui sont dévolues et en particulier de se voir attribuer soit un attribut d'application émettrice E-ID, soit un attribut d'application réceptrice R-ID. Ces conditions d'installation seront explicitées de manière plus détaillée ultérieurement dans la description.

Pour tenir compte de l'ensemble des applications destinataires auxquelles est destiné un message MSG donné, c'est-à-dire le contenu des données élaborées par une application émettrice E-ID, l'étape $100_a$ de gestion précitée peut comporter avantageusement une étape 1001 de lecture de la liste des attributs d'identification des applications destinataires LID, cette opération de lecture étant effectuée élément de liste par élément de liste, ainsi que mentionné précédemment dans la description, le premier élément ou tête de liste étant lu et les éléments successifs, premier élément de la queue de liste, étant lus successivement. Ce mode de lecture permet de discriminer successivement chaque élément de liste. Dans ces éléments de liste, il est ainsi procédé à la lecture de chaque attribut d'identification constitutif de chaque élément de liste de la liste des attributs d'identification des applications destinataires LID.

L'étape de gestion de présence des applications réceptrices $100_a$ comporte ensuite une première étape 1002 de test de discrimination de cet élément courant d'attribut d'identification ID-D comme relatif à une application connue dans la définition donnée précédemment.

Sur réponse positive à la première étape de test 1002, une étape 1003 d'adjonction de cet élément d'attribut d'identification ID-D à une liste des attributs d'identification des applications connues, la liste L-ACK, est prévue, et, sur réponse négative à l'étape de test 1002 précitée, une étape 1004 d'adjonction de cet élément d'attribut d'identification à une liste des attributs d'identification des applications inconnues L-NACK est également prévue. On dispose ainsi des deux listes précitées, L-ACK et L-NACK, représentatives de l'état des applications connues et inconnues de l'interface de communication interne précédemment mentionnée dans la description.

A la suite des étapes 1003 et 1004 précitées, une étape 1005 de suppression de l'élément courant d'attribut d'identification de la liste des attributs d'identification des applications destinataires LID est réalisée, cette opération permettant en fait d'engendrer une liste actualisée, laquelle correspond à la queue de la liste d'origine lue à l'étape 1001. Cette opération de suppression de l'élément courant d'attribut d'identification de la liste des attributs d'identification peut être réalisée par simple lecture récurrente, élément par élément, ainsi que mentionné précédemment.

Suite à l'étape 1005, une deuxième étape de test 1006 est prévue, cette étape consistant en un test de vacuité de la liste des attributs d'identification des applications destinataires LID après suppression du premier élément, le test de vacuité 1006 étant ainsi appliqué sur la queue de la liste d'origine obtenue suite à l'étape 1005.

Sur réponse négative à la deuxième étape de test 1006, une étape de retour à l'élément courant d'attribut d'identification de la liste actualisée LID est effectuée, la queue de la liste précitée n'étant pas vide et constituant une nouvelle liste des attributs d'identification des applications destinataires, ce retour permettant bien entendu le bouclage sur l'ensemble des opérations 1001 à 1005 et 1006 précitées, tant que la queue de la liste actualisée LID n'est pas vide.

Sur réponse positive au deuxième test 1006 précité, les listes des attributs d'identification des applications connues L-ACK et inconnues L-NACK étant disponibles, une étape 1007 de test de vacuité de la liste des attributs d'identification des applications connues L-ACK est effectuée. L'étape de test de vacuité 1007 précité permet en fait de gérer directement l'existence d'une situation anormale dans laquelle la liste des applications connues est vide, aucune application de l'objet portatif multi-applications n'étant en mesure de recevoir un message d'information.

Suite à l'étape 1007 précitée, la procédure 100 d'envoi de messages comprend enfin une étape $100_b$ permettant d'assurer l'écriture du message MSG en mémoire non volatile, compte tenu de la réponse au test de vacuité de la liste des applications connues 1007 précité.

Ainsi qu'il a en outre été représenté en figure 3d, l'étape $100_b$ d'écriture du message en mémoire non volatile comprend, sur réponse positive à l'étape de test 1007 précitée, une étape 1008 d'établissement d'un message de statut d'erreur, en l'absence d'application destinataire trouvée, cette étape d'établissement d'un message de statut d'erreur 1008 étant elle-même suivie d'un retour de la liste des attributs d'identification des applications inconnues, c'est-à-dire de la liste L-NACK.

En ce qui concerne l'étape d'établissement d'un statut d'erreur 1008 et l'étape de retour de la liste L-NACK 1012, on indique que le retour des informations correspondantes peut être effectué, de manière avantageuse, par inscription dans la mémoire de travail RAM. Ces informations sont alors disponibles pour utilisation directe, soit par l'interface de communication interne, soit le cas échéant par le système d'exploitation OS gérant le microprocesseur.

L'étape d'écriture du message en mémoire non volatile $100_b$ représentée en figure 3d comporte également, sur réponse négative à l'étape de test de vacuité 1007 de la liste L-ACK, une étape 1009 d'attribution, au message d'information MSG, d'un numéro d'ordre interne dans les conditions qui ont été décrites précédemment dans la description.

Dans le mode de réalisation de la procédure d'envoi de messages représentée et décrite en relation avec la figure 3d, on indique que le numéro d'ordre interne est un numéro au sens ordinal du terme, indépendamment de l'application émettrice E-ID et des applications réceptrices R-ID concernées par le message d'information MSG de numéro considéré.

L'étape $100_b$ d'écriture du message en mémoire non volatile $18_a$ comporte, suite à l'étape 1009 précitée, une étape 1010 d'écriture proprement dite de ce message telle que définie précédemment et contenant donc les attributs de ce dernier constitués par le numéro d'ordre N-MSG, les données contenues dans ce message MSG, la liste L-ACK des attributs d'identification des applications connues dans la mémoire non volatile, l'attribut d'identification de l'application émettrice E-ID. Lorsque toutes les applications destinataires sont connues de l'interface de communication interne, la liste L-ACK correspond à la liste LID-Dest représentée au format selon la figure 3c.

On rappelle qu'à ce stade, le statut de lecture de chaque argument de la liste précitée est toujours maintenu à la valeur statut non lu.

Ainsi que représenté en figure 3d, l'étape 1010 d'écriture proprement dite du message MSG peut alors être suivie avantageusement d'une étape 1011 de retour du numéro d'ordre N-MSG du message MSG considéré. Cette étape de retour, comme les étapes de retour 1008 et 1012 précédemment mentionnées, peut consister en une écriture du numéro d'ordre du message en mémoire vive RAM par exemple. Ainsi, l'information relative au numéro de message N-MSG peut être utilisée, soit par le système d'exploitation OS, soit par l'interface de communication interne, pour assurer une procédure de transmission d'un message d'acquittement en réception, ainsi que décrit précédemment en liaison avec les figures 2b à 2d.

L'étape 1011 précitée est alors suivie de l'étape 1012 de retour de la liste L-NACK des attributs d'identification des applications inconnues de l'interface, tel que mentionné précédemment.

On comprend ainsi que, pour une application émettrice donnée E-ID au cours d'une session d'utilisation d'une telle application, celle-ci est amenée à procéder à l'envoi d'une pluralité de messages MSG, chaque message comportant un numéro d'ordre N-MSG qui lui est propre, indépendant de l'application considérée, mais également une liste des applications destinataires auxquelles est destiné ce message, cette liste consistant en la liste L-ACK des attributs d'identification des applications destinataires et des statuts de lecture connus de l'interface par exemple.

Ainsi, et dans un mode de transmission unidirectionnel de messages d'information d'une application émettrice E-ID vers une pluralité d'applications réceptrices destinataires, toute application de l'objet portatif multi-applications, connue de l'interface de communication, objet de l'invention et distincte de l'application émettrice E-ID, peut donc constituer une application réceptrice R-ID à laquelle un message d'information MSG est, le cas échéant, destiné.

Dans ces conditions, les messages d'information étant inscrits en mémoire programmable non volatile $18_a$, lors d'une utilisation ultérieure d'une application réceptrice précitée, l'activation de cette application permet d'autoriser la procédure de lecture de messages 200 précédemment mentionnée dans la description.

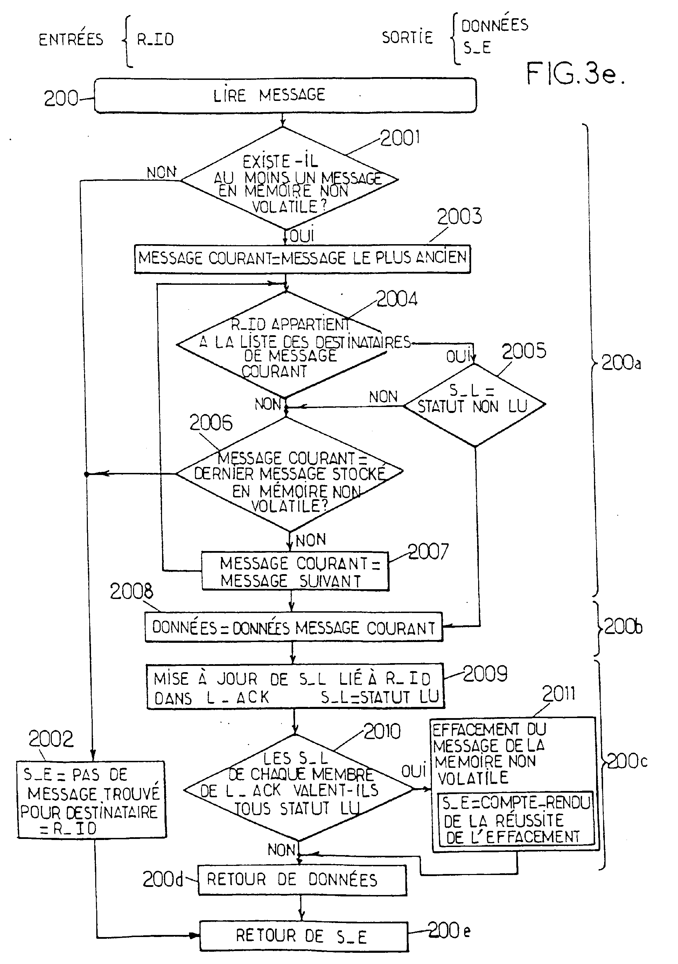

Cette procédure de lecture de messages 200 sera maintenant décrite en liaison avec la figure 3e.

Dans cette procédure, les paramètres d'entrée sont les paramètres d'attribut d'identification de l'application réceptrice considérée R-ID, et les paramètres de sortie sont les paramètres de données du message destiné à cette application réceptrice, ainsi qu'un paramètre de statut d'erreur S-E consistant en un compte rendu d'exécution.

De préférence, ainsi que représenté en figure 3e, la commande de lecture de messages de l'interface de communication de la mémoire non volatile peut comporter au moins, à partir de l'attribut d'identification R-ID de l'application réceptrice et d'une liste d'attributs d'identification des applications destinataires, la liste LID-Dest, une étape $200_a$ de recherche du premier message non déjà lu dont le destinataire est l'application réceptrice R-ID.

En effet, dans le cadre d'une transmission unidirectionnelle, lorsqu'une application de l'objet portatif multi-applications est sélectionnée par l'utilisateur, cette application est rendue active par le système d'exploitation. Toutefois, et selon une caractéristique particulièrement avantageuse du protocole, objet de la présente invention, à cette même application peut être alloué un attribut d'application réceptrice vis-à-vis des transactions antérieures. Dans une telle situation, la commande de lecture de messages 200 peut alors être lancée dès que l'application retenue par l'utilisateur est rendue active par le système d'exploitation OS.

Dans ces conditions, l'étape $200_a$ de recherche du premier message de données non lu dont cette application réceptrice est destinataire peut comporter avantageusement un test 2001 d'existence d'au moins un message MSG en mémoire non volatile, destiné à l'application réceptrice R-ID considérée, c'est-à-dire l'application active précitée.

Sur réponse négative au test 2001 précité, une étape 2002 d'établissement d'un statut d'erreur S-E est prévue, en l'absence de message MSG destiné à cette application destinataire. L'étape 2002 précitée peut alors être suivie d'une étape de retour de statut d'erreur $200_e$, ainsi qu'il sera décrit ultérieurement dans la description.

Sur réponse positive au premier test 2001, une étape 2003 est prévue, permettant l'attribution, au message MSG le plus ancien, de la qualité de message courant. On comprend en particulier qu'à partir du numéro d'ordre de message N-MSG mémorisé en mémoire non volatile, il est possible, pour réaliser l'étape 2003, d'appeler une routine de tri retenant comme message courant le message portant le numéro N-MSG le plus faible, ce numéro d'ordre le plus faible correspondant, de ce fait, au message MSG le plus ancien.

L'étape 2003 est elle-même suivie d'un deuxième test 2004 d'appartenance de l'attribut d'identification de l'application réceptrice R-ID à la liste des attributs d'identification des applications destinataires du message courant considéré, c'est-à-dire la liste L-ACK qui a été inscrite avec le message considéré en mémoire non volatile à l'étape 1010 représentée en figure 3d.

Sur réponse positive au test 2004, un autre test 2005 de vérification du statut de lecture du message courant comme message non lu est prévu, cette opération de vérification s'effectuant par lecture de l'argument du statut de lecture S-L correspondant à l'attribut d'identification de l'application réceptrice R-ID considérée.

Sur réponse négative au test 2005 précité, et au test 2004, un test 2006 d'égalité d'ordre absolu du message courant au dernier message de données stocké en mémoire non volatile est effectué. Ce test permet de s'assurer que l'ensemble des messages mémorisés en mémoire non volatile et destinés à l'application destinataire R-ID considérée ont été parcourus.

Sur réponse positive au test 2006, un retour est prévu à l'étape 2002 d'établissement de statut d'erreur, et, sur réponse négative au même test 2006 précité, une étape 2007 d'attribution au message courant du message d'information suivant est effectuée, cette étape 2007 étant elle-même suivie d'un retour au test 2004 afin de s'assurer que l'ensemble des messages pour l'application réceptrice R-ID considérée ont été lus.

Sur réponse positive au test 2005, une étape $200_b$ de récupération des données contenues dans le message courant est effectuée. Cette opération peut consister, de manière avantageuse, en une inscription en mémoire volatile, c'est-à-dire en mémoire RAM, du champ de données du message courant inscrit en mémoire non volatile.

L'étape $200_b$ est elle-même suivie d'une étape $200_c$ permettant d'assurer la gestion du statut du message MSG au regard de l'application réceptrice R-ID considérée, afin d'assurer une gestion complète de la mémoire non volatile dans laquelle chaque message est inscrit. L'étape $200_c$ peut alors être suivie d'une étape $200_d$ de retour de données et de l'étape $200_e$ de retour de statut d'erreur S-E , consécutive à l'étape 2002 d'établissement de statut d'erreur précédemment mentionnée. On rappelle que les étapes de retour de données ou de retour de statut d'erreur peuvent être réalisées par écriture en mémoire de travail volatile RAM par l'application réceptrice R-ID puis lecture par le système d'exploitation OS.

En ce qui concerne l'étape $200_c$ de gestion du statut du message en mémoire non volatile, en référence à la figure 3e, on indique que cette étape peut comporter, pour une liste des attributs d'identification des applications destinataires LID-Dest ou la liste L-ACK comportant des termes de liste formés par un argument d'attribut d'identification de l'application destinataire et un argument de statut de lecture, tel que représenté en figure 3c, correspondant à un statut lu ou non lu de ce message courant, une étape 2009 de mise à jour de l'argument de statut de lecture S-L correspondant lié à cette application destinataire par attribution à cet argument d'une valeur arbitraire de statut lu, et une étape 2010 de test pour vérifier que la valeur de cet argument du statut de lecture est égale à la valeur de statut lu de chaque argument de statut de lecture de la liste des attributs d'identification de ces applications destinataires. Cette étape 2010 permet en fait de vérifier que l'ensemble des applications destinataires mentionnées dans la liste des applications destinataires LID-Dest ou L-ACK, a effectué la lecture du message MSG de numéro de message N-MSG considéré avant toute opération ultérieure.

Sur réponse positive à l'étape 2010 de vérification précitée, une étape 2011 d'effacement dans la mémoire non volatile du message courant est alors effectuée, puisque toutes les applications destinataires ont effectué la lecture de ce dernier. L'étape 2011 comporte également l'établissement d'un statut d'erreur S-E, compte rendu de la réussite de l'étape d'effacement précitée.

Ainsi, suite à l'étape 2011 d'effacement du message courant considéré et suite à la réponse négative à l'étape 2010 de vérification que la valeur de l'argument du statut de lecture est égale à la valeur de statut lu, les étapes $200_d$ et $200_e$ de retour de données contenues dans le champ données du message MSG correspondant au message courant puis de retour de statut d'erreur $200_e$ peuvent alors être effectuées.

D'une manière générale, on indique que les commandes et les procédures correspondantes d'envoi de messages et de lecture de messages, telles que représentées et décrites en liaison avec les figures 3d et 3e précitées, peuvent être mises en oeuvre en présence ou en l'absence de l'étape 1011 de retour du numéro de message N-MSG, correspondant au retour du numéro d'ordre du message courant transmis, ainsi que représenté à la figure 3b. Dans l'hypothèse d'une absence de l'étape 1011 précitée, l'étape de lecture de messages telle que représentée à la figure 3e peut être mise en oeuvre sans changement. Enfin, la gestion de la mémoire programmable non volatile $18_a$ du point de vue de l'écriture, la lecture et l'effacement des messages d'information dans cette dernière est avantageusement effectuée par l'interface de communication interne par un processus connu de gestion de listes doublement chaînées, à chaque message MSG considéré étant affecté de manière classique des paramètres de gestion correspondants tels que nombre d'octets du message, code arrêt, pointeurs sur bloc précédent et suivant.

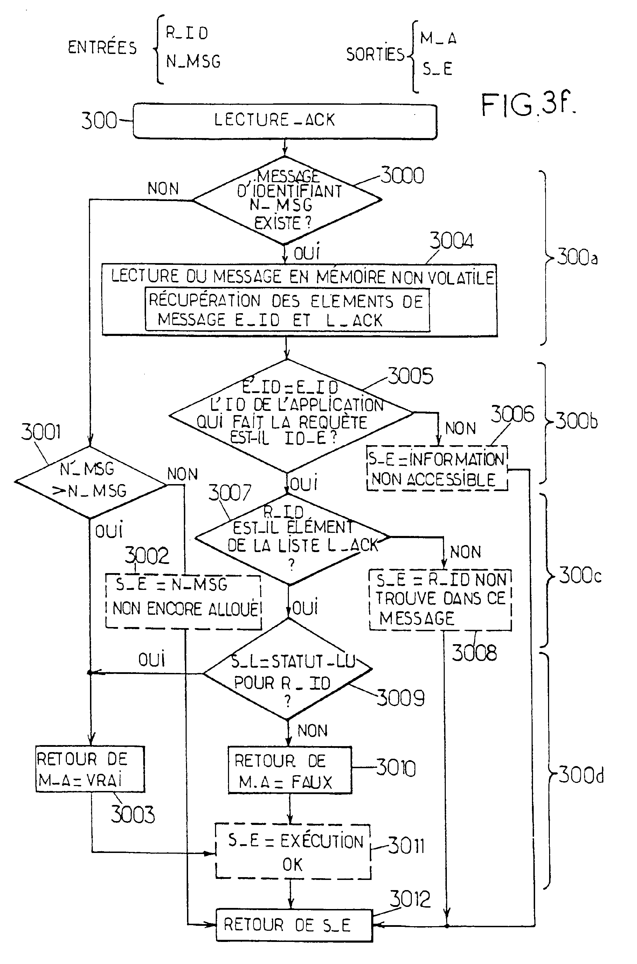

Toutefois, l'étape 1011 précitée permet la mise en oeuvre d'une procédure de transmission à l'application émettrice E-ID d'un message d'acquittement en réception, la procédure 300 représentée en figures 2b à 2d, dans un mode de réalisation préférentiel, lequel sera maintenant décrit en liaison avec la figure 3f. Cette procédure est mise en oeuvre au moyen d'une commande ou procédure, notée Lecture-ACK-R, permettant à une application émettrice ou ayant émis un message MSG antérieurement, application E-ID, de consulter l'état de ce message vis-à-vis de la lecture par une application destinataire donnée.

La commande Lecture-ACK-R met en oeuvre les paramètres suivants en entrée, tels qu'un attribut d'identification d'une application réceptrice R-ID, et bien entendu, un numéro de message N-MSG pour lequel l'application émettrice E-ID précitée cherche à connaître l'état de ce message vis-à-vis de la lecture par l'application destinataire précitée.

En sortie, la commande Lecture-ACK-R retourne les paramètres relatifs à un résultat booléen « message acquitté », désigné par M-A, indiquant en fait l'état lu ou non lu du message de numéro N-MSG précité, par cette application réceptrice, ainsi qu'un statut d'erreur S-E relatif à l'opération réalisée par la commande 300 de Lecture-ACK-R.

Ainsi que représenté sur la figure 3f, la commande Lecture-ACK-R comprend une étape $300_a$ de lecture et de vérification de présence du message considéré de numéro N-MSG, une étape $300_b$, de contrôle permettant de vérifier qu'une application peut uniquement demander l'acquittement des messages dont elle est émettrice, une étape $300_c$ de recherche de l'attribut d'identification de l'application réceptrice considérée R-ID relativement au message considéré N-MSG, et enfin une étape de calcul du résultat $300_d$ consistant en fait en l'établissement du paramètre booléen M-A indiquant l'état du message, lu ou non lu.

Le mode opératoire de la commande précitée, dans le mode de réalisation préférentiel représenté en figure 3f, est le suivant :

- le système d'exploitation OS fournit, à l'interface de communication interne, l'attribut d'identification de l'application émettrice sélectionnée E-ID. Ce dernier permet de contrôler que, dans le cas où le message de numéro N-MSG n'est pas effacé, l'application qui exécute la commande Lecture-ACK-R, l'application émettrice E-ID sélectionnée, dans le cas d'une transmission unidirectionnelle ainsi que mentionné précédemment dans la description, est bien celle qui a émis le message précité.
  Dans ces conditions, une application donnée ne peut obtenir des informations que sur les messages dont elle est l'émettrice. Dans le cas contraire, un message d'erreur est envoyé.
- Dans le cas où l'attribut d'identification de l'application réceptrice R-ID n'est pas membre de la liste des applications destinataires LID-Dest, un message d'erreur est également émis.

Les opérations précitées peuvent être mises en oeuvre de la manière ci-après :

- Etape $300_a$ :

Un test de vérification d'existence du message de numéro de message N-MSG, test 3000, est effectué. Sur réponse négative au test précité, un test 3001 est prévu, permettant de vérifier que le numéro de message suivant N'-MSG est supérieur au numéro N-MSG précité.

Sur réponse positive au test 3001, aux paramètres booléens M-A indiquant l'état de message, lu ou non lu, est affectée à une étape 3003 la valeur vraie. L'étape 3003 précitée est alors suivie d'une étape 3011, au statut d'erreur S-E étant affecté la valeur d'exécution correcte, notée Exécution OK. L'étape 3011 est suivie d'une étape 3012 de retour de statut d'erreur S-E.

Sur réponse négative au test 3001 précité, une étape 3002 d'allocation de statut d'erreur S-E est effectuée, en raison de l'absence de numéro de message N-MSG alloué au message considéré à cette étape de la procédure. L'étape 3002 est suivie de l'étape 3012 de retour de statut d'erreur correspondante. Les étapes 3001, 3002, 3003 permettent de gérer la non existence d'un message de numéro d'ordre N-MSG correspondant.

Sur réponse positive au test 3000 précité de l'étape $300_a$, une étape 3004 est prévue, consistant à effectuer la lecture du message en mémoire non volatile, dont le numéro d'ordre est N-MSG. Cette étape implique la récupération des éléments de message, tels que notamment l'attribut d'identification de l'application émettrice E-ID associé au message de numéro considéré et la liste des applications destinataires LID-Dest ou la liste L-ACK.

- Etape $300_b$

L'étape 3004 est suivie d'un test 3005 consistant à vérifier que l'attribut d'identification de l'application qui lance la commande Lecture-ACK-R correspond à l'attribut d'identification de l'application émettrice E-ID du message de numéro N-MSG. Cette étape de test est notée E'-ID = E-ID sur la figure 3f.

Sur réponse négative à l'étape 3005 précitée, une étape d'établissement d'un statut d'erreur S-E à la valeur « information non accessible » est prévue, étape 3006. Cette étape est suivie du retour de statut d'erreur 3012 mentionnée précédemment.

- Etape $300_c$

Sur réponse positive au test 3005 précité, un test 3007 est prévu, permettant de vérifier l'appartenance de l'attribut d'identification de l'application destinataire comme élément de la liste des applications destinataires LID-Dest ou de la liste L-ACK. Sur réponse négative au test 3007 est prévue une étape 3008 d'établissement du statut d'erreur SE, l'attribut d'identification de l'application destinataire R-ID n'étant pas trouvé dans le message de numéro N-MSG considéré. L'étape 3008 est suivie de l'étape de retour de statut d'erreur 3012.

- Etape 300$_d$

Sur réponse positive au test 3007 précité, un nouveau test 3009 est prévu, lequel consiste à vérifier que le statut de lecture S-L a la valeur de statut lu pour l'application destinataire R-ID considérée. Cette opération est notée S-L = statut lu pour R-ID.

Sur réponse positive au test 3009 précité, l'étape de retour du message booléen M-A à la valeur vraie, étape 3003, est appelée puis ensuite l'étape 3011 précitée d'établissement du statut d'erreur S-E à l'exécution correcte.

Sur réponse négative au test 3009 précité, une étape 3010 est prévue, laquelle correspond à l'établissement du message booléen M-A à la valeur fausse, M-A = Faux, le message n'ayant de ce fait pas été lu par l'application destinataire R-ID considérée. L'étape 3010 est alors suivie de l'étape 3011 d'établissement du statut d'erreur S-E à l'exécution correcte.

D'une manière générale, on indique que, suite au lancement de la commande Lecture-ACK-R, le résultat de la requête est vrai , en conséquence le message dont le numéro N-MSG donné a été lu par l'application R-ID destinataire donnée est acquitté, dans les cas suivants :

■ lorsque ce message est effacé, le numéro d'identification de ce message étant strictement inférieur au prochain numéro de message disponible, ou
■ lorsque l'attribut d'identification de l'application destinataire donnée R-ID est présent dans la liste des attributs d'identification des applications destinataires LID-Dest et que le statut de lecture S-L du message correspondant est à la valeur « message lu ».

Dans tous les autres cas, le résultat est faux.

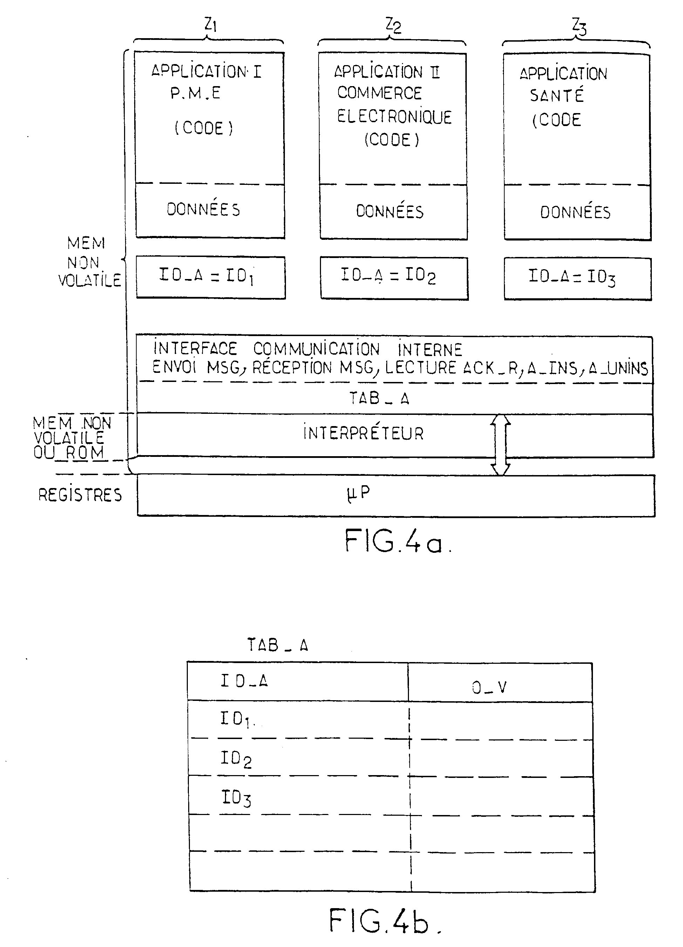

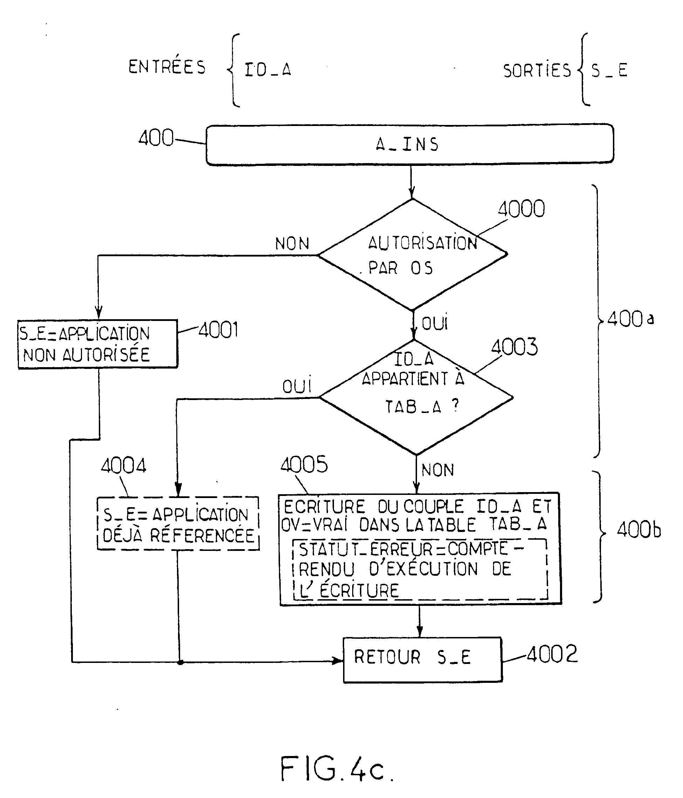

Un mode de gestion spécifique des applications émettrice et réceptrice et en particulier de l'allocation d'attribut d'application émettrice, respectivement réceptrice, aux différentes applications de l'objet portatif multi-applications, objet de la présente invention, dans le cas d'une communication unidirectionnelle de message d'information MSG, sera maintenant donné en liaison avec les figures 4a et 4b relativement à une procédure d'installation, respectivement de désinstallation de ces applications.

Selon un aspect particulièrement remarquable du protocole, objet de la présente invention, la gestion des attributs d'applications émettrice, respectivement réceptrice, est effectuée par l'interface de communication interne elle-même, en liaison avec le système d'exploitation OS.

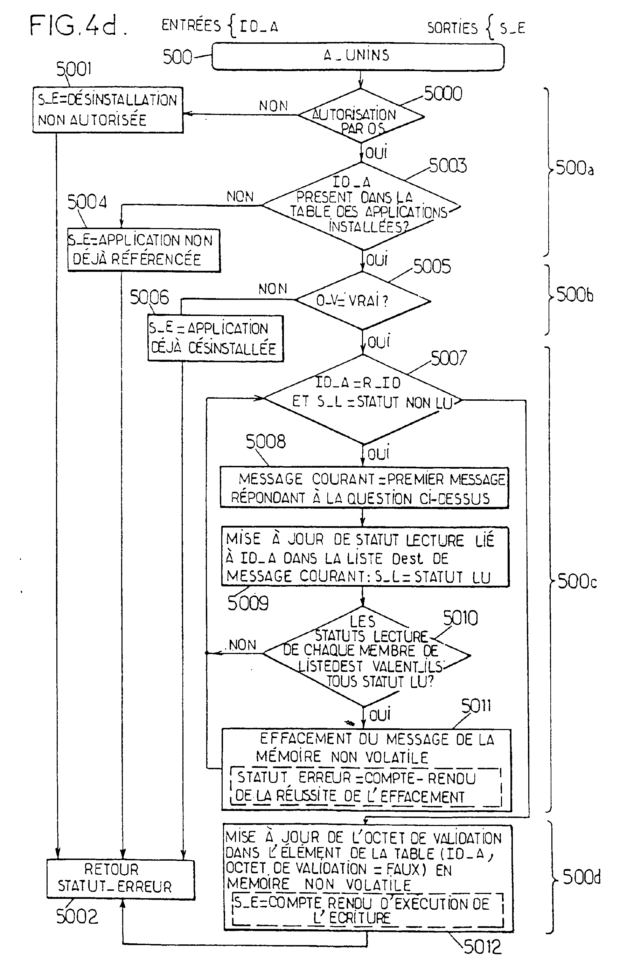

Ainsi que représenté en figure 4a, l'interface de communication interne est munie, d'une part, des commandes ou primitives Envoi MSG, réception MSG, Lecture-ACK-R, et des primitives ou commandes d'installation A-INS et de désinstallation A-UNINS qui seront décrites maintenant en liaison avec les figures 4b, 4c et 4d.

En outre, afin d'assurer la gestion des applications de l'objet portatif multi-applications, objet de la présente invention, l'interface de communication interne possède une zone mémoire, en mémoire non volatile, ainsi que représenté en figure 4a, dans laquelle l'interface stocke une table de données, notée TAB-A, ces données consistant, pour chaque application, en l'attribut d'identification de l'application considérée ID-A auquel est associé un octet de validation de chaque application, noté O-V, paramètre booléen indiquant le caractère d'activité ou de non activité de l'application considérée vis-à-vis de l'interface de communication interne mise en oeuvre.

Une application insérée dans la table de données TAB-A peut ainsi être émettrice ou réceptrice.

On indique que, au cours de l'utilisation et de la mise en oeuvre du protocole, objet de la présente invention, l'octet de validation précité permet de gérer une succession de configurations de transmissions unidirectionnelles entre une application émettrice quelconque et les applications réceptrices, quelle que soit l'application émettrice considérée parmi ces applications. Bien entendu, la table des applications TAB-A mémorisée dans la zone mémoire de l'interface de communication interne précitée est consultée à chaque activation des commandes d'émission ou de réception de message par l'intermédiaire de l'interface de communication.

Une illustration de la table des applications TAB-A est donnée en figure 4b.

En ce qui concerne la commande d'installation A-INS, en référence à la figure 4c, on indique que cette commande met en oeuvre comme paramètre d'entrée l'attribut d'identification ID-A de l'application qui a été validée comme active par le système d'exploitation OS.

Dans ce but, la commande d'installation 400 A-INS peut comprendre une étape 400$_a$ consistant à contrôler qu'une application de même attribut d'identification n'est pas déjà considérée comme active par l'interface de communication interne, suivie d'une étape 400$_b$ consistant en l'écriture des informations dans la table des applications référencées, c'est-à-dire la table TAB-A. Les paramètres de sortie de commande d'installation précitée concernent un statut d'erreur S-E retourné en fonction des différentes situations rencontrées.

Pour la mise en oeuvre de l'étape 400$_a$, ainsi que représenté en figure 4c, cette étape peut comprendre une étape 4000 d'autorisation par le système d'exploitation OS de procéder à l'installation. On indique que le critère d'autorisation peut être multiple et que, dans un mode de réalisation simplifié, ce critère d'autorisation peut consister simplement en le fait que l'application est considérée comme active par ce système d'exploitation. Sur réponse négative au test 4000, un statut d'erreur est établi à l'étape 4001, au statut d'erreur S-E étant attribué la valeur « application non-autorisée ». Cette étape 4001 est suivie d'une étape 4002 de retour de statut d'erreur, ainsi que mentionné précédemment dans la description.

Sur réponse positive à l'étape d'autorisation 4000 par le système d'exploitation OS, l'interface de communication interne, objet de la présente invention, prend la main et met en oeuvre une étape de test 4003 de vérification d'appartenance de l'attribut d'identification ID-A à la table des applications installées. Le test 4003 peut consister à vérifier que l'octet de validation O-V a la valeur vraie pour l'application de l'attribut d'identification ID-A considéré.

Sur réponse positive au test 4003 précité, une étape 4004 d'établissement de statut d'erreur S-E, établie à la valeur « application déjà référencée », est effectuée. L'étape 4004 est suivie de l'étape 4002 de retour de statut d'erreur précédemment mentionnée.

Sur réponse négative au test 4003, l'étape $400_b$ peut consister en une étape 4005 consistant en l'écriture dans la table des applications TAB-A du couple ID-A et de l'octet de validation O-V à la valeur vraie, dans la mémoire non volatile. Cette étape 4005 comporte également une étape d'établissement de statut d'erreur S-E correspondant en un compte rendu d'exécution de l'écriture dans la table d'application TAB-A. L'étape 4005 précitée est elle-même suivie de l'étape de retour de statut d'erreur 4002 précédemment mentionnée.

Ainsi, l'état actif de l'application ID-A vis-à-vis de l'interface de communication est garanti par le fait que c'est l'application elle-même qui exécute, sous l'autorisation du système d'exploitation OS, la commande A-INS précitée.

Lorsque l'application émettrice ne souhaite plus procéder à la communication des messages d'information MSG ou lors de l'invalidation de l'application considérée par le système d'exploitation OS, une procédure de désinstallation peut être exécutée, soit par l'application elle-même, soit par le système d'exploitation OS, par l'intermédiaire d'une commande de désinstallation A-UNINS.

Le but de la commande de désinstallation A-UNINS est de supprimer la référence de l'application dans l'interface de communication interne et, en particulier, de corriger la valeur de l'octet de validation O-V en lui attribuant la valeur fausse, l'application considérée d'attribut d'identification ID-A n'étant de ce fait plus considérée comme application connue.

En référence à la figure 4d, les paramètres d'entrée de la commande de désinstallation référencée 500 sont l'attribut d'identification de l'application considérée ID-A et les paramètres de sortie un statut d'erreur S-E retourné en fonction des différentes situations rencontrées.

Ainsi que représenté en figure 4d, la commande d'installation précitée comporte une étape $500_a$ permettant d'assurer le contrôle que l'application émettrice considérée est installée ou a été installée précédemment, une étape $500_b$ permettant de contrôler que cette application n'a pas fait l'objet d'une procédure de désinstallation antérieure, une étape $500_c$ de gestion des messages d'information MSG en attente de lecture par l'application soumise à désinstallation et, enfin, une étape $500_d$ permettant la mise à jour de l'indicateur de validité de l'application, l'octet de validation O-V, par rapport à l'interface de communication.

En ce qui concerne les différentes étapes, celles-ci peuvent comporter avantageusement :

- Etape $500_a$

Un test de vérification 5000 de l'autorisation de désinstallation par le système d'exploitation OS.

Ainsi que mentionné précédemment dans la description relativement à la commande d'installation 400, ce test d'autorisation peut consister en une pluralité de critères d'autorisation établis au niveau du système d'exploitation OS. A titre d'exemple, ce test peut permettre d'éviter d'effacer des applications et d'introduire des applications frauduleuses avec le même identifiant.

Dans un mode de réalisation simplifié, correspondant à la commande d'installation 400, le critère d'autorisation peut consister simplement en le fait que l'application soumise au processus de désinstallation est considérée comme active par le système d'exploitation OS.

Sur réponse négative au test 5000 précité, une étape 5001 d'établissement de statut d'erreur S-E à la valeur « désinstallation non autorisée » est effectuée, cette étape 5001 étant suivie d'une étape 5002 de retour de statut d'erreur, ainsi que mentionné précédemment dans la description.

Sur réponse positive au test 5000 précité, un test 5003 est alors réalisé, ce test pouvant consister à vérifier que l'attribut d'identification ID-A de l'application soumise au processus de désinstallation est présent dans la table des applications installées.

Sur réponse négative au test 5003 précité, une étape 5004 d'établissement de statut d'erreur S-E à la valeur « application non déjà référencée » est établie, cette étape 5004 étant suivie de l'étape 5002 de retour de statut d'erreur.

- Etape 500$_b$

Sur réponse positive au test 5003 précité, l'étape 500$_b$ est réalisée, par exemple au moyen d'un test 5005 permettant de vérifier que la valeur de l'octet de validation O-V est égale à la valeur vraie.

Sur réponse négative au test 5005 précité, une étape 5006 est prévue, permettant l'établissement du statut d'erreur S-E à la valeur « application déjà désinstallée ». L'étape 5006 est suivie de l'étape 5002 de retour de statut d'erreur précédemment mentionnée dans la description.

- Etape 500$_c$

Sur réponse positive au test 5005, l'étape 500$_c$ est mise en oeuvre au moyen d'un test 5007 de vérification de l'existence d'un message dont l'un des destinataires correspond à l'attribut d'identification ID-A et dont le statut de lecture S-L est à la valeur « statut non lu ». Ce test s'écrit, selon la formule logique :

$$\text{ID-A} = \text{R-ID ET S-L} = \text{statut non lu.}$$

Sur réponse positive au test 5007 précité, une étape 5008 est réalisée, permettant d'attribuer le premier message satisfaisant à la condition du test 5007, c'est-à-dire le message dont le numéro d'ordre est le plus faible, comme un message courant. L'étape 5008 est suivie d'une étape 5009 permettant la mise à jour du statut de lecture S-L lié à l'application considérée soumise à désinstallation, dont l'attribut d'identification est ID-A dans la liste des applications destinataires, au statut de lecture S-L étant attribuée la valeur statut lu. L'étape 5009 est elle-même suivie d'une étape 5010 consistant à vérifier que la valeur précitée des statuts de lecture de chaque membre de la liste L-ACK est égale à la valeur « statut lu ».

Sur réponse positive au test 5010 précité, une étape 5011 d'effacement du message MSG de la mémoire non volatile est effectuée, cette étape comportant une étape d'établissement du statut d'erreur S-E à la valeur « compte rendu de la réussite de l'effacement ».

Sur réponse négative au test 5010 et suite à l'étape 5011 précitée, un retour à l'étape de test 5007 est effectué pour un autre message de numéro d'ordre différent, pour la même application soumise à désinstallation d'attribut d'identification ID-A.

- Etape 500$_d$

Sur réponse négative au test 5007 précité, l'étape 500$_d$ est réalisée au moyen d'une étape 5012 consistant en la mise à jour de l'octet de validation O-V dans la table des applications TAB-A en mémoire non volatile par attribution à l'octet de validation O-V de la valeur faux, pour l'application d'attribut d'identification ID-A considérée. L'étape 5012 précitée comporte également une étape d'établissement de statut d'erreur S-E à la valeur « compte rendu d'exécution de l'écriture » de la table d'application. L'étape 5012 est elle-même suivie de l'étape 5002 de retour de statut d'erreur.

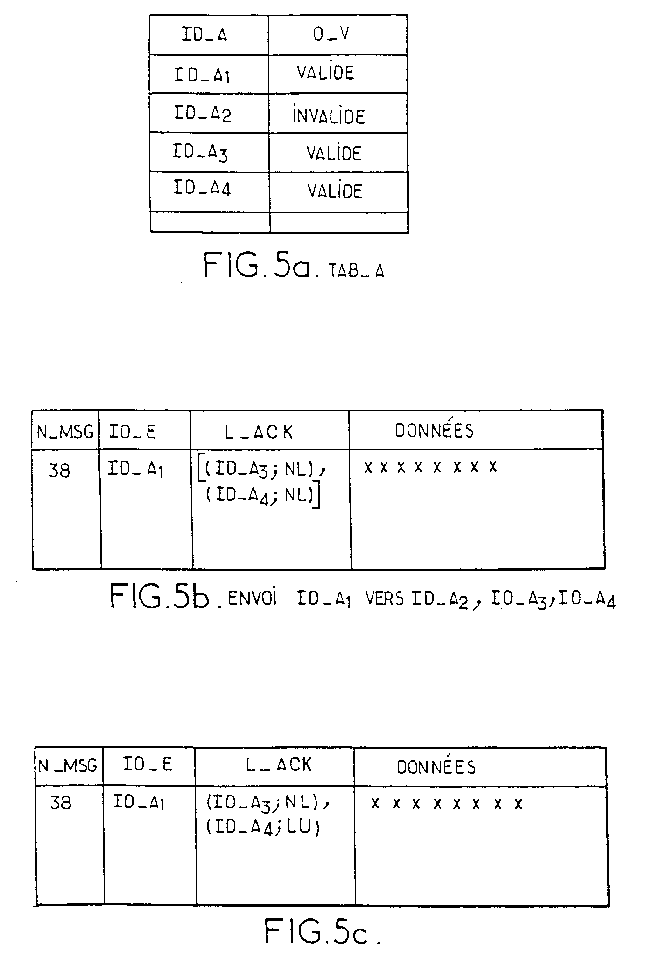

Un exemple de mode opératoire général de l'interface de communication interne permettant la mise en oeuvre du protocole conforme à l'objet de la présente invention sera maintenant donné en liaison avec les figures 5a, 5b et 5c.

A titre d'exemple non limitatif, en référence à la figure 5a, on indique que l'interface de communication interne est réputé comprendre une table des applications TAB-A dans laquelle l'application numéro un, ID-A$_1$, est valide, son octet de validation O-V étant à la valeur valide, l'application numéro deux, ID-A$_2$ est invalide, suite à une opération du système d'exploitation OS par exemple, l'octet de validation de cette dernière O-V étant à la valeur invalide, les applications numéro trois et quatre étant elles-mêmes valides.

La figure 5b représente, à titre d'exemple, une situation dans laquelle l'application ID-A$_1$ est application émettrice d'un message de numéro de message N-MSG = 38 vers les applications réceptrices connues de l'interface de communication, objet de la présente invention. Dans cette situation, la liste L-ACK comporte uniquement des applications ID-A$_3$ et ID-A$_4$, l'application ID-A$_2$ étant invalide, dont les mots de statut sont à la position non lu, NL, les données proprement dites du message d'information étant notées XXXX.

Enfin, la figure 5c correspond au même message N-MSG = 38 mémorisé dans la mémoire programmable 18$_a$ après lecture de ce message par la seule application destinataire ID-A$_4$, l'attribut statut de lecture relatif à cette application dans la liste L-ACK étant à la valeur LU. Le message N-MSG = 38 n'est effacé de la mémoire programmable qu'après que tous les attributs statut de lecture aient été placés à la valeur LU, chaque application destinataire ayant procédé à la lecture du message considéré.

En ce qui concerne enfin la mise en oeuvre du protocole, objet de la présente invention, on indique que celui-ci peut être assorti de développements divers.

Alors que la description précédente permet une mise en oeuvre par transmission unidirectionnelle de messages d'une application émettrice à différentes applications réceptrices, il est en outre possible de prévoir une hiérarchisation des applications contenues dans l'objet portatif multi-applications, objet de la présente invention. Dans ce but, il est alors possible de subdiviser la table des applications TAB-A en deux tables distinctes, l'une des tables étant relative aux applications émettrices, et l'autre aux applications réceptrices par exemple. En outre, dans un tel cas, les commandes d'installation et de désinstallation décrites en liaison avec les figures 4c et 4d peuvent alors être dédiées à une application spécifique.

Enfin, on indique qu'un processus de sécurisation du processus d'installation peut être réalisé par l'application de critères distincts au niveau des autorisations 4000 et 5000 délivrées par le système d'exploitation par exemple.

En d'autres termes, l'accès au système de messagerie interne par l'intermédiaire de l'interface de communication interne et du protocole, objet de la présente invention, peut être conditionné à différents critères tels que celui de la connaissance d'un mot de passe ou analogue. Dans ces conditions, les tests 4000 et 5000 précités peuvent être rendus consécutifs à la connaissance, par l'application concernée, du mot de passe précité ou d'une clef spécifique.

**Revendications**

**1.** Procédé mettant en oeuvre un protocole d'échange interne d'informations entre des applications dans un objet portatif multi-applications (10) comprenant au moins des moyens d'entrée/sortie (12) permettant de communiquer avec un terminal, des moyens de traitement de l'information (14) reliés aux moyens d'entrée/sortie (12), une mémoire de travail (16) et une mémoire non volatile (18) reliées aux moyens de traitement de l'information, cette mémoire non volatile comportant une zone mémoire (Z1, Z2, Z3) spécifique à chaque application, chaque zone mémoire spécifique étant subdivisée en une zone mémoire spécifique de données, une zone mémoire spécifique d'instructions et une zone mémoire spécifique d'identification, relatives à cette application, ledit protocole consistant au moins, à partir d'une interface de communication interne munie d'au moins une commande d'envoi de message et une commande de réception de message résidentes dans la mémoire non volatile (18), à :

a) allouer à une première application (E_ID), par l'intermédiaire d'un attribut d'identification (ID_A) de cette première application, un attribut d'application émettrice sur requête d'envoi, par cette première application, d'un message d'informations (MSG) vers une ou plusieurs autres applications;
b) allouer à au moins une deuxième application (R_ID), distincte de cette première application, par l'intermédiaire d'un attribut d'identification (ID_A) de cette deuxième application, un attribut d'application réceptrice sur requête d'envoi par ladite première application d'un message d'informations vers cette deuxième application;
c) procéder à l'échange du message d'informations (MSG) entre ladite première (E_ID) et ladite au moins une deuxième application (R_ID) par envoi (100) par la première application puis réception (200) par ladite au moins une deuxième application dudit message d'informations, grâce à la mise en oeuvre de ladite interface de communication utilisée comme intermédiaire, ce qui permet d'assurer un échange d'informations entre ces applications tout en supprimant sensiblement le risque d'interaction entre ces applications.

**2.** Procédé selon la revendication 1, **caractérisé en ce que** celui-ci comporte en outre une étape de transmission (300) à l'application émettrice (E_ID), par l'intermédiaire de ladite interface de communication, d'un message d'acquittement en réception dudit message d'information par ladite application réceptrice (R-ID), la transmission dudit message d'acquittement en réception intervenant postérieurement aux étapes a) et b) d'allocation d'un attribut d'application émettrice, respectivement réceptrice, mais soit antérieurement, soit postérieurement ou encore pendant l'étape c) d'échange du message d'information entre application émettrice (E_ID) et application réceptrice (R-ID).

**3.** Procédé selon la revendication 1, **caractérisé en ce que** l'étape (c) d'échange consiste en :

- une étape (100) d'envoi, à partir de ladite application émettrice, dudit message d'information dans une zone mémoire de ladite mémoire de travail, par l'intermédiaire de ladite commande d'envoi de messages;
- une étape (200) de réception, à partir de ladite application réceptrice, dudit message d'information inscrit dans ladite zone mémoire de la mémoire de travail, par l'intermédiaire de ladite commande de réception de message.

**4.** Procédé selon la revendication 3, **caractérisé en ce que** l'étape (100) d'envoi consiste au moins en :

- une instruction d'écriture, à partir de ladite application émettrice, dudit message d'information dans une zone mémoire de ladite mémoire non volatile (18);

- un appel, par ladite application émettrice, de la commande d'envoi de message de l'interface de communication de la mémoire programmable;
- la transmission par ladite interface de communication à ladite application émettrice d'un message d'acquittement d'émission.

**5.** Procédé selon la revendication 3, **caractérisé en ce que** l'étape de réception (200) consiste au moins en un appel, par ladite application réceptrice, de la commande de lecture de message de l'interface de communication de la mémoire non volatile (18).

**6.** Procédé selon la revendication 4, **caractérisé en ce que** ladite étape (100) d'envoi comporte en outre, à partir de l'attribut d'identification (ID-A) de l'application émettrice et d'une liste des attributs d'identification des applications destinataires (LID), cette liste consistant en une succession d'éléments de liste :

- une étape (100a) de gestion de la présence des applications réceptrices comprenant au moins pour chaque élément courant d'attribut d'identification de ladite liste des attributs d'identification des applications destinataires (LID) :

  • une première étape (1002) de test de discrimination de cet élément courant d'attribut d'identification comme relatif à une application connue, et, sur réponse positive à ladite première étape de test,
  • une étape (1003) d'adjonction de cet élément d'attribut d'identification à une liste des attributs d'identification des applications connues (L-ACK), et, sur réponse négative à ladite première étape de test,
  • une étape (1004) d'adjonction de cet élément d'attribut d'identification à une liste des attributs d'identification des applications inconnues (L-NACK); et, suivant lesdites étapes d'adjonction,
  • une étape (1005) de suppression de l'élément courant d'attribut d'identification de ladite liste des attributs d'identification des applications destinataires (LID) permettant d'engendrer une liste actualisée, et
  • une deuxième (1006) étape de test de vacuité de ladite liste des attributs d'identification des applications destinataires (LID), et, sur réponse négative à ladite deuxième étape de test,
  • une étape de retour (1001) à l'élément courant d'attribut d'identification de ladite liste actualisée, constituant une nouvelle liste des attributs d'identification des applications destinataires, et, sur réponse positive audit deuxième test,

- une étape (1007) de test de vacuité de ladite liste des attributs d'identification des applications connues (L-ACK), et
- ladite étape d'instruction d'écriture (100b), à partir de ladite application émettrice.

**7.** Procédé selon la revendication 6, **caractérisé en ce que** ladite étape d'instruction d'écriture (100b) comporte au moins :

- une étape (1007) de test de vacuité de ladite liste des attributs d'identification des applications connues (L-ACK), et, sur réponse positive à cette étape de test de vacuité de ladite liste des attributs d'identification des applications connues (L-ACK),
- une étape (1008) d'établissement d'un message de statut d'erreur, en l'absence d'application destinataire trouvée, et sur réponse négative à cette étape de test de vacuité de ladite liste des attributs d'identification des applications connues (L-ACK),
- une étape (1009) d'attribution audit message d'information d'un numéro d'ordre interne, et
- une étape (1010) d'écriture proprement dite de ce message et des attributs de ce message constitués par ce numéro d'ordre (N_MSG), les données contenues dans ce message d'information et de la liste (L-ACK) des attributs d'identification des applications connues dans la mémoire non volatile;
- une étape (1011) de retour du numéro de message (N_MSG) ; et suite aux étapes (1008, 1011) d'établissement d'un message de statut d'erreur et de retour du numéro de message,
- une étape (1012) de retour de la liste (L-NACK) des attributs d'identification des applications inconnues.

**8.** Procédé selon la revendication 5, **caractérisé en ce que** ladite commande de lecture de message de l'interface de communication de la mémoire non volatile (18) comporte au moins, à partir de l'attribut d'identification (R-ID) de l'application réceptrice et d'une liste des attributs d'identification des applications connues (L-ACK) :

- une étape (200a) de recherche du premier message de données non lu dont cette application réceptrice est destinataire, ladite étape de recherche comportant au moins :

• un premier test (2001) d'existence d'au moins un message de données en mémoire de travail (16), et, sur réponse négative à ce premier test,

• une étape (2002) d'établissement d'un statut d'erreur, en l'absence de message de données destiné à cette application destinataire, et, sur réponse positive à ce premier test (2001),

• une étape (2003) d'attribution au message courant du message de données le plus ancien, et

• un deuxième test (2004) d'appartenance de l'attribut d'identification de l'application réceptrice à ladite liste des attributs d'identification des applications connues (L-ACK), et, sur réponse positive audit deuxième test (2004),

• un troisième test (2005) de vérification du statut du message courant comme message non lu, et, sur réponse négative auxdits deuxième et troisième tests (2004, 2005),

• un quatrième test (2006) d'égalité d'ordre absolu du message courant au dernier message de données stocké en mémoire non volatile (18), et, sur réponse positive audit quatrième test, retour à ladite étape d'établissement d'un statut d'erreur, et, sur réponse négative au quatrième test (2006),

• une étape (2007) d'attribution au message courant du message de données suivant et de retour audit deuxième test, et, sur réponse positive audit troisième test,

- une étape (200b) de récupération des données contenues dans ledit message courant, pour transmission à ladite application destinataire, et

- une étape (200c) de gestion du statut dudit message courant,

- une étape (200d) de transmission des données récupérées à ladite application destinataire,

- une étape (200e) de retour de statut d'erreur consécutive à l'étape de transmission de données récupérées et à l'étape (2002) d'établissement de statut d'erreur en l'absence de message de données destiné à cette application destinataire.

9. Procédé selon la revendication 8, **caractérisé en ce que** l'étape (200c) de gestion du statut dudit message courant comporte au moins, pour une liste des attributs d'identification des applications destinataires (LID-Dest) comportant des termes de liste formés par un argument d'attribut d'identification de l'application destinataire et un argument de statut de lecture représentatif de l'état du message courant vis-à-vis de la lecture par cet application destinataire et correspondant à un statut lu ou non lu de ce message courant :

- une étape (2009) de mise à jour de l'argument de statut de lecture (S-L) lié à cette application destinataire, par attribution à cet argument d'une valeur de statut lu ; et

- une étape (2010) de test consistant à vérifier que la valeur de cet argument du statut de lecture est égale à la valeur de statut lu de chaque argument de statut de lecture de ladite liste des attributs d'identification des applications connues, et, sur réponse positive à cette étape de test de vérification,

- une étape (2011) d'effacement, dans la mémoire non volatile (18), dudit message courant et d'établissement d'un statut d'erreur, compte rendu de la réussite de cette étape d'effacement.

10. Procédé selon l'une des revendications précédentes, **caractérisé en ce que** ledit message d'information comporte au moins :

- un champ relatif aux données échangées entre lesdites applications ;

- un champ relatif au nombre d'octets constitutifs du champ relatif aux données échangées ;

- au moins un champ relatif à l'identifiant d'une application réceptrice.

11. Procédé selon la revendication 10, **caractérisé en ce que** ledit message d'information comporte en outre un champ relatif au numéro du message de données échangées entre ces applications, ledit numéro constituant un numéro d'ordre permettant d'établir une chronologie des messages d'information échangés entre ces applications.

12. Objet portatif multi-applications (10), comprenant au moins des moyens d'entrée/sortie (12) permettant de communiquer avec un terminal, des moyens de traitement (14) reliés aux moyens d'entrée/sortie, une mémoire de travail (16) et une mémoire programmable non volatile (18) reliées aux moyens de traitement de l'information, cette mémoire non volatile comportant une zone mémoire (Z1, Z2, Z3) spécifique à chaque application, chaque zone mémoire spécifique étant subdivisée en une zone mémoire spécifique de données, une zone mémoire spécifique d'instructions et une zone mémoire spécifique d'identification, relatives à cette application, ledit objet portatif multi-applications comportant en outre, dans ladite mémoire non volatile (18), une interface de communication munie d'au moins une commande d'envoi de message, une commande de réception de message, ce qui permet par allocation à une première application d'un attribut d'application émettrice (E_ID), sur requête d'envoi par cette première application d'un message de données vers au moins une autre application, respectivement par allocation à au moins une deuxième application, distincte de cette première application, d'un attribut d'application réceptrice (R_ID), de procéder à l'échange de messages d'information entre application émettrice et réceptrice, par l'intermédiaire de ladite interface de communication, en supprimant sensiblement le risque d'interaction entre ces applications.

**Claims**

1. Method using a protocol for internal exchange of information in a portable multi-application object (10) comprising at least input/output means (12) enabling communication with a terminal, information processing means (14) connected to the input/output means (12), a working memory (16) and a programmable nonvolatile memory (18) connected to the information processing means, said nonvolatile memory including a specific memory zone (Z1, Z2, Z3) for each application, each specific memory zone being subdivided into a specific memory zone for data, a specific memory zone for instructions, and a specific memory zone for identification that relate to said application, said protocol having at least the steps of, from an internal communications interface provided with at least one message sending command and one message reception command that reside in the nonvolatile memory (18):

   a) assigning to a first application (E_ID), via an identification attribute of said first application, a source application attribute upon request for said first application to send an information message (MSG) to one or more other applications;
   b) assigning to at least one second application (R_ID), distinct from said first application, via an identification-attribute (ID_A) of said second application, a target application attribute upon request for said first application to send an information message to said second application;
   c) proceeding with the exchange of the information message (MSG) between said first (E_ID) and said at least one second application (R_ID) by sending (100) said information message on the part of the first application and then receiving (200) said message by said at least one second application, by the implementation of said communications interface used as an intermediary, for assuring an exchange of information between said applications while substantially preventing the risk of interaction between said applications.

2. The protocol of claim 1, **characterized in that** it further includes a step of transmission (300) to the source application (E_ID), via said communications interface, of a message acknowledging reception of said information message by said destination application (R_ID), the transmission of said reception acknowledgement message occurring later than the steps a) and b) of assigning a source application attribute and a target application attribute, but either before or after or even during the step c) of proceeding with the exchange of the information message between the source application (E_ID) and the target application (R_ID).

3. The protocol of claim 1, **characterized in that** the step c) of exchange of the information message comprises the steps of:

   - a step (100) of sending said information message from said source application to a memory zone of said working memory, via said message sending commands;
   - a step (200) of receiving by said target application, of said information message written into said memory zone of the working memory, via said message reception command.

4. The protocol of claim 3, **characterized in that** the step (100) of sending of said information message consists at least of:

   - an instruction for said source application to write said information message in a memory zone of said nonvolatile memory (18);
   - a call by said source application for a message sending command of communications interface of the programmable memory;
   - a transmission by said communications interface to said source application of a transmission acknowledgement message.

5. The protocol of claim 4, **characterized in that** the step (200) of receiving of said information message consists at least of a call by said target application for a message reading command of communications interface of the nonvolatile memory (18).

6. The protocol of claim 4, **characterized in that** said step (100) of sending further includes, based on the identification attribute (ID_A) of the source application, a list of identification attributes of the destination applications (LID), said list consisting of a succession of list elements as follows:

   - a step (100a) of managing the presence of source applications, including at least for each current identification attribute element of said list of identification attributes of destination applications (LID):

      . a first step (1002) of discrimination testing of the current identification attribute element as relating to a known application, and if the response is positive to said first test step,
      . a step (1003) of adding said identification attribute element to a list of identification attributes of the known applications (L-ACK), and if the response to said first test step is negative,
      . a step (1004) of adding said identification attribute element to a list of identification attributes of unknown applications (L-NACK); and following said addition steps,
      . a step (1005) of suppressing the current identification attribute element of said list of identification attributes of the destination applications (LID) so as to generate an updated list; and
      . a second step (1006) of testing for emptiness of said list of identification attributes of the destination applications (LID), and if the response to said second test step is negative,
      . a step of returning (1001) to the current identification attribute element in said updated list, constituting a new list of identification attributes of the destination applications, and if the response to said second test is positive,
      . a step (1007) testing for emptiness of said list of identification attributes of the known applications (L-ACK), and

   - said step (100b) of instruction for writing from said source application.

7. The protocol of claim 6, **characterized in that** said writing instruction step (100b) includes at least:

   - a step (1007) of testing for emptiness of said list of identification attributes of the known applications (L-ACK), and if the response to said step of testing for emptiness of said list of identification attributes of known applications (L-ACK) is positive,
   - a step (1008) of establishing an error state message, in the absence of a found destination application, and if the response to said step testing for emptiness of said list of identification attributes of the known applications (L-ACK) is negative,
   - a step (1009) attributing an internal serial number to said information message, and
   - a step (1010) of writing per se of said message and the attributes of said message constituted by said serial number (N_MSG), the data contained in this information message, and the list (L-ACK) of identification attributes of the known applications; in the nonvolatile memory;
   - a step (1011) returning the message number (N_MSG); and following the steps (1008, 1011) of establishing an error state message and returning the message number,
   - a step (1012) of returning the list (L-NACK) of the identification attributes of the unknown applications.

8. The protocol of claim 5, **characterized in that** given the identification attribute of the destination application (R_ID) and a list of identification attributes of the known applications (L-ACK), said message reading command of the communications interface of the nonvolatile memory (18) includes at least:

   - a step (200a) of searching for the first data message not read for which the target application is the destination, said search step including at least:

      . a first test (2001) for the existence of at least one data message in working memory (16), and if the response to said first test is negative,
      . a step (2002) establishing an error state, in the absence of a data message intended for this destination application, and if the response to said first test (2001) is positive,
      . a step (2003) of attributing the oldest data message to the current message, and
      . a second test (2004) for the appearance of the identification attribute of the target application in said list of identification attributes of the known applications (L-ACK), and if the response to said second test (2004) is positive,
      . a third test (2005) verifying the status of the current message as a non-read message, and if the response to said second and third tests (2004, 2005) is negative,

. a fourth test (2006) of absolute serial equality of the current message with the last data message stored in nonvolatile memory (18), and if the response to said fourth test is positive, returning to said step of establishing an error state, and if the response to the fourth test (2006) is negative,
. a step (2007) attributing to the current message the next data message and returning to said second test, and if the response to said third test is positive,

- a step (200b) of recovery of the data contained in said current message, for transmission to said destination application, and
- a step (200c) of managing the status of said current message,
- a step (200d) of transmission of the data recovered to said destination application,
- a step (200e) of returning the error state consecutive to the step of transmission of the recovered data and consecutive to the step (2002) of establishing the error state, in the absence of a data message intended for this destination application.

9. The protocol of claim 8, **characterized in that** for a list of identification attributes of the destination applications (LID-Dest) that includes list terms formed by an identification attribute argument of the destination application and a reading status argument representing the status of the current message with respect to the reading by this destination application and corresponding to a read or non-read status of this current message, the step (200c) of managing the status of said current message includes at least:

- a step (2009) of updating the reading status argument (S-L) linked with the destination application, by attribution of a read status value Lu to said argument; and
- a test step (2010) consisting of verifying that the value of the reading status argument is equal to the read status value of each reading status argument of said list of identification attributes of the known applications, and if the response to this verification test step is positive,
- a step (2011) of deletion, in the nonvolatile memory (18), of said current message and of t establishing an error state, taking the success of this deletion step into account.

10. The protocol of any previous claims, **characterized in that** said information message includes at least:

- a field relating to data exchanged between said applications;
- a field relating to constituent 8-bit bytes of the field relating to the data exchanged;
- at least one field relating to an identifier of a target application.

11. The protocol of claim 10, **characterized in that** said information message further includes a field relating to a serial number of the data message exchanged between the applications for establishing a chronology of information messages exchanged between said applications.

12. A portable multi-application object (10) comprising input/output means (12) enabling communication with a terminal, processing means (14) connected to the input/output means, a working memory (16) and a programmable nonvolatile memory (18) connected to the information processing means, the nonvolatile memory including a specific memory zone (Z1, Z2, Z3) for each application, each specific memory zone being subdivided into a specific memory zone for data, a specific memory zone for instructions; and a specific memory zone for identification that relate to this application, said portable multi-application object further including, in said nonvolatile memory (18), a communications interface provided with at least one message sending command and one message reception command, which by allocation to a first application of a source application attribute upon request for the first application to send a data message to at least one further application, and respectively by assignment to at least one second application, distinct from said first application, of a target application attribute (R_ID), permits the exchange of information messages between the source and target applications, via said communications interface, while substantially preventing the risk of interaction between said applications.

**Patentansprüche**

1. Verfahren mit einem Protokoll zum internen Informationsaustausch zwischen Anwendungen in einem tragbaren Multianwendungsgegenstand (10), welcher mindestens Eingangs-/Ausgangsmittel (12) zum Kommunizieren mit einem Terminal, mit den Eingangs-/Ausgangsmitteln (12) verbundene Informationsbearbeitungsmittel (14), einen mit den Informatiorisbearbeitungsmitteln verbundenen Arbeitsspeicher (16) und nicht-flüchtigen Speicher (18) umfasst, wobei dieser nicht-flüchtige Speicher eine für jede Anwendung spezifische Speicherzone (Z1, Z2, Z3) besitzt, wobei jede spezifische Speicherzone in Bezug auf die jeweilige Anwendung in eine datenspezifische Speicherzone, eine anweisungsspezifische Speicherzone und eine identifikationsspezifische Speicherzone unterteilt ist, wobei das besagte Protokoll ausgehend von einer internen Kommunikationsschnittstelle, welche mindestens einen Meldung-Sendebefehl umfasst und einen Meldung-Empfangsbefehl, beide im nichtflüchtigen Speicher (18) befindlich, mindestens darin besteht:

a) einer ersten Anwendung (E_ID) über ein Identifikationsattribut (ID_A) dieser ersten Anwendung das Attribut einer sendenden Anwendung zuzuweisen, nachdem durch diese erste Anwendung eine Anfrage zum Senden einer Informationsmeldung (MSG) zu einer oder mehreren anderen Anwendungen gestellt wurde;
b) mindestens einer zweiten Anwendung (R_ID), die von dieser ersten Anwendung getrennt ist, über ein Identifikationsattribut (ID_A) dieser zweiten Anwendung das Attribut einer empfangenden Anwendung zuzuweisen, nachdem durch die erste Anwendung eine Anfrage zum Senden einer Informationsmeldung zu dieser zweiten Anwendung gestellt wurde;
c) den Austausch der Informationsmeldung (MSG) zwischen der ersten Anwendung (E_ID) und mindestens einer zweiten Anwendung (R_ID) durchzuführen durch Senden (100) durch die erste Anwendung und Empfangen (200) durch mindestens eine zweite Anwendung der besagten Informationsmeldung dank Einsatz der Kommunikationsschnittstelle, die als Vermittler benutzt wird, was einen Informationsaustausch zwischen diesen Anwendungen bei spürbarer Beseitigung möglicher Interaktion zwischen diesen Anwendungen ermöglicht.

2. Verfahren nach Anspruch 1, **dadurch gekennzeichnet, dass** es außerdem einen Übermittlungsschritt (300) umfasst, mit welchem über die Kommunikationsschnittstelle eine Bestätigungsmeldung zur sendenden Anwendung (E_ID) übermittelt wird über den Empfang der besagten Informationsmeldung durch die empfangende Anwendung (R_ID), wobei die Übermittlung der Empfangsbestätigungsmeldung nach den Schritten a) und b) Verleihen des Attributs einer sendenden bzw. empfangenden Anwendung erfolgt, jedoch entweder vor oder nach oder während des Schrittes c) Austausch der Informationsmeldung zwischen der sendenden Anwendung (E_ID) und der empfangenden Anwendung (R_ID).

3. Verfahren nach Anspruch 1, **dadurch gekennzeichnet, dass** der Austauschschritt c) aus folgenden Schritten besteht:

- einem Sendeschritt (100) der besagten Informationsmeldung aus der sendenden Anwendung in eine Speicherzone des Arbeitsspeichers über den besagten Meldung-Sendebefehl.
- einem Empfangsschritt (200) der in die Speicherzone des Arbeitsspeichers eingeschriebenen Informationsmeldung durch die empfangende Anwendung über den besagten Meldung-Empfangsbefehl.

4. Verfahren nach Anspruch 3, **dadurch gekennzeichnet, dass** der Sendeschritt (100) mindestens aus Folgendem besteht:

- einer Schreibanweisung der Informationsmeldung aus der sendenden Anwendung in eine Speicherzone des nicht-flüchtigen Speichers (18)
- einem Aufruf des Meldung-Sendebefehls in der Kommunikationsschnittstelle des programmieren Speichers durch die sendende Anwendung
- der Übermittlung einer Sendebestätigungsmeldung zur sendenden Anwendung durch die Kommunikationsschnittstelle.

5. Verfahren nach Anspruch 3, **dadurch gekennzeichnet, dass** der Empfangsschritt (200) mindestens aus einem Aufruf des Meldung-Lesebefehls in der Kommunikationsschnittstelle des nicht-flüchtigen Speichers (18) durch die empfangende Anwendung besteht.

6. Verfahren nach Anspruch 4, **dadurch gekennzeichnet, dass** der Sendeschritt (100) außerdem ausgehend aus dem Identifikationsattribut (ID_A) der sendenden Anwendung und aus einer Liste der Identifikationsattribute der Erripfängeranwendungen (LID) - wobei diese Liste aus einer Folge von Listenelementen besteht - Folgendes umfasst:

- einen Verwaltungsschritt (100a) der Präsenz der empfangenden Anwendungen, welcher für jedes aktuelle Identifikationsattribut-Element der Identifikationsattribut-Liste der Empfängeranwendungen (LID) mindestens Folgendes umfasst:

• einen ersten Testschritt (1002) zur Unterscheidung dieses aktuellen Identifikationsattribut-Elementes als zu einer bekannten Anwendung gehörend; und nach positiver Antwort auf den ersten Testschritt
• einen Einfügeschritt (1003) dieses Identifikationsattribut-Elementes in eine Identifikationsattribut-Liste der bekannten Anwendungen (L_ACK); und nach negativer Antwort auf den ersten Testschritt
• einen Einfügeschritt (1004) dieses Identifikationsattribut-Elementes in eine Identifikationsattribut-Liste der unbekannten Anwendungen (L-NACK); und nach den Einfügeschritten:
• einen Löschschritt (1005) des aktuellen Identifikationsattribut-Elementes aus der Identifikationsattribut-Liste der Empfängeranwendungen (LID), was das Generieren einer aktualisierten Liste gestattet
• einen zweiten Testschritt (1006) auf Leerheit der Identifikationsattribut-Liste der Empfängeranwendungen (LID); und nach negativer Antwort auf den zweiten Testschritt
• einen Rücksendeschritt (1001) zum aktuellen Identifikationsattribut-Element der aktualisierten Liste, welche eine neue Identifikationsattribut-Liste der Empfängeranwendungen bildet, und nach positiver Antwort auf den zweiten Test

- einen Testschritt (1007) auf Leerheit der Identifikationsattribut-Liste der bekannten Anwendungen (L-ACK) und
- den besagten Schreibanweisungsschritt (100b) aus der sendenden Anwendung.

7. Verfahren nach Anspruch 6, **dadurch gekennzeichnet, dass** der Schreibanweisungsschritt (100b) mindestens Folgendes umfasst:

- einen Testschritt (1007) auf Leerheit der Identifikationsattribut-Liste der bekannten Anwendungen (L-ACK); und nach positiver Antwort auf diesen Leerheits-Testschritt der Identifikationsattribut-Liste der bekannten Anwendungen (L-ACK)
- einen Erstellungsschritt (1008) einer Fehlerstatusmeldung, wenn keine Empfängeranwendung gefunden wird; und nach negativer Antwort auf diesen Leerheits-Testschritt der Identifikationsattribut-Liste der bekannten Anwendungen (L-ACK)
- einen Zuweisungsschritt (1009) einer internen laufenden Nummer für die Informationsmeldung; und
- einen eigentlichen Schreibschritt (1010) dieser Meldung und der Attribute dieser Meldung, welche aus dieser laufenden Nummer (N_MSG), den in dieser Informationsmeldung enthaltenen Daten sowie der Identifikationsattribut-Liste (L-ACK) der bekannten Anwendungen im nicht-flüchtigen Speicher bestehen;
- einen Rücksendeschritt (1011) der Meldungsnummer (N_MSG); und nach dem Erstellungsschritt einer Fehlerstatusmeldung (1008) und dem Rücksendeschritt des Meldungsnummer (1011)
- einen Rücksendeschritt (1012) der Identifikationsattribut-Liste (L-NACK) der unbekannten Anwendungen.

8. Verfahren nach Anspruch 5, **dadurch gekennzeichnet, dass** der Meldung-Lesebefehl der Kommunikationsschnittstelle des nicht-flüchtigen Speichers (18) ausgehend vom Identifikationsattribut (R-ID) der empfangenden Anwendung und einer Identifikationsattribut-Liste der bekannten Anwendungen (L-ACK) mindestens Folgendes umfasst:

- einen Suchschritt (200a) nach der ersten ungelesenen Datenmeldung, deren Empfängern diese erste empfangende Anwendung ist, wobei der Suchschritt mindestens Folgendes umfasst:

• einen ersten Existenztest (2001) mindestens einer Datenmeldung im Arbeitsspeicher (16); und nach negativer Antwort auf diesen ersten Test
• einen Erstellungsschritt (2002) eines Fehlerstatus, wenn keine Datenmeldung für diese Empfängeranwendung vorhanden ist; und nach positiver Antwort auf diesen ersten Test (2001)
• einen Zuweisungsschritt (2003) der ältesten Datenmeldung an die aktuelle Meldung; und
• einen zweiten Zugehörigkeitstest (2004) des Identifikatiorisattributs der empfangenden Anwendung zur Identifikationsattribut-Liste der bekannten Anwendungen (L-ACK); und nach positiver Antwort auf den zweiten Test (2004)
• einen dritten Überprüfungstest (2005) des aktuellen Meldungsstatus als ungelesene Meldung; und nach negativer Antwort auf den zweiten und den dritten Test (2004, 2005)
• einen vierten Gleichheitstest (2006) absoluter Art zwischen der aktuellen Meldung und der letzten im nicht-flüchtigen Speicher (18) gespeicherten Datenmeldung; und nach positiver Antwort auf den vierten Test Rückkehr zum Erstellungsschritt eines Fehlerstatus; und nach negativer Antwort auf den vierten Test (2006)
• einen Zuweisungsschritt (2007) der nächsten Datenmeldung an die aktuelle Meldung sowie Rückkehrschritt zum zweiten Test; und nach positiver Antwort auf den dritten Test

- einen Entnahmeschritt (200b) der Daten aus der aktuellen Meldung zwecks Übermittlung zur Empfängeranwendung; und
- einen Verwaltungsschritt (200c des Status der aktuellen Meldung
- einen Übermittlungsschritt (200d) der entnommenen Daten zur Empfängeranwendung
- einen Rücksendeschritt (200e) des Fehlerstatus nach dem Übermittlungsschritt der entnommenen Daten und nach dem Erstellungsschritt (2002) eines Fehlerstatus, wenn keine Datenmeldung für die Empfängeranwendung vorhanden ist.

9. Verfahren nach Anspruch 8, **dadurch gekennzeichnet, dass** der Verwaltungsschritt (200c) des Status der aktuellen Meldung für eine Identifikationsattribut-Liste der Empfängeranwendungen (LID-Dest) mit Listenbegriffen, welche gebildet werden von einem Identifikationsattribut-Argument der Empfängeranwendung und einem Lesestatus-Argument, das für den Status der aktuellen Meldung in Bezug auf den Lesevorgang durch diese Empfängeranwendung steht und einem Gelesen-Status oder Ungelesen-Status dieser aktuellen Meldung entspricht, mindestens folgende Schritte umfasst:

- einen Aktualisierungsschritt (2009) des mit dieser Empfängeranwendung verbundenen Lesestatus-Arguments (S-L) durch Zuweisung eines Gelesen-Status-Wertes für dieses Argument; und
- einen Testschritt (2010), welcher aus der Prüfung besteht, dass der Wert dieses Lesestatus-Arguments dem Gelesen-Status-Wert jedes Lesestatus-Arguments der Identifikationsattribut-Liste der bekannten Anwendungen entspricht; und nach positiver Antwort auf diesen Überprüfungsschritt
- einen Löschschritt (2011) der aktuellen Meldung aus dem nicht-flüchtigen Speicher (18) und einen Erstellungsschritt eines Fehlerstatus, Berichtes über die erfolgreiche Durchführung dieses Löschschrittes.

10. Verfahren nach einem der vorgenannten Ansprüche, **dadurch gekennzeichnet, dass** die Informationsmeldung mindestens Folgendes umfasst:

- ein Feld für die zwischen den besagten Anwendungen ausgetauschten Daten
- ein Feld für die Anzahl der Bytes, aus welchen das Feld für die ausgetauschten Daten besteht
- mindestens ein Feld für die Identifikation einer empfangenden Anwendung.

11. Verfahren nach Anspruch 10, **dadurch gekennzeichnet, dass** die Informationsmeldung außerdem ein Feld für die Nummer der Meldung über den Datenaustausch zwischen diesen Anwendungen aufweist, wobei diese Nummer eine laufende Nummer ist, welche das Erstellen einer Chronologie der zwischen diesen Anwendungen ausgetauschten Informationsmeldungen gestattet.

12. Tragbarer Mulianwendungsgegenstand (10), welcher mindestens Eingangs-/Ausgangsmittel (12) zum Kommunizieren mit einem Terminal, mit den Eingangs-/Ausgangsmitteln verbundene Informationsbearbeitungsmittel (14), einen mit den Informationsbearbeitungsmitteln verbundenen Arbeitsspeicher (16) und nicht-flüchtigen, programmierbaren Speicher (18) umfasst, wobei dieser nicht-flüchtige Speicher eine für jede Anwendung spezifische Speicherzone (Z1, Z2, Z3) besitzt, wobei jede spezifische Speicherzone in Bezug auf die jeweilige Anwendung in eine datenspezifische Speicherzone, eine anweisungsspezifische Speicherzone und eine identifikationsspezifische Speicherzone unterteilt ist, wobei der besagte tragbare Multianwendungsgegenstand außerdem im nicht-flüchtigen Speicher (18) eine Kommunikationsschnittstelle mit mindestens einem Meldung-Sendebefehl, einem Meldung-Empfangsbefehl umfasst, was durch Zuweisung des Attributs einer sendenden Anwendung (E_ID) an eine erste Anwendung nach einer Anfrage dieser ersten Anwendung zum Senden einer Datenmeldung zu mindestens einer anderen Anwendung bzw. durch Zuweisung des Attributs einer empfangenden Anwendung (R_ID) an mindestens eine zweite Anwendung, die von der ersten Anwendung getrennt ist, ermöglicht, Informationsmeldungen zwischen der sendenden und der empfangenden Anwendung über die besagte Kommunikationsstelle bei spürbarer Beseitigung möglicher Interaktion zwischen diesen Anwendungen auszutauschen.

## FIG.1a.
(ART ANTÉRIEUR)

## FIG.1b.

- MESSAGE MSG
- ALLOCATION ATTRIBUT D'APPLICATION
  ÉMETTRICE E-ID
- LISTE DES APPLICATIONS DESTINATAIRES
  LID

A

- ALLOCATION À CHAQUE APPLICATION
  DESTINATAIRE ATTRIBUT
  D'APPLICATION RECEPTRICE
  R _ ID

B

- ÉCHANGE DU MESSAGE MSG
  ENTRE
          E_ID ET R_ID

C

FIG.1c.

ENVOI PAR E-ID DES DONNÉES DU
MESSAGE M SG DANS MÉMOIRE NON
VOLATILE

100

RÉCEPTION PAR R_ID DES
DONNÉES DU MESSAGE MSG INSCRITES
DANS MÉMOIRE RAM

200

C

FIG.2a.

100

ENVOI PAR E_ID DES DONNÉES
DU MESSAGE MSG DANS MÉMOIRE
N _ MSG

200

RÉCEPTION PAR R_ID DES DONNÉES
DU MESSAGE MSG INSCRITES
DANS MEMOIRE R A M
N_MSG

300

TRANSMISSION À E_ID D'UN
ACQUITTEMENT EN RÉCEPTION
PAR R_ID DE N_MSG

FIG.2b.

100

ENVOI PAR E_ID DES DONNÉES
DU MESSAGE MSG DANS MÉMOIRE
NON VOLATILE
N_MSG

200

TRANSMISSION A E_ID D'UN
ACQUITTEMENT EN RÉCEPTION
PAR R_ID DE N'_MSG

300

RÉCEPTION PAR R_ID DES DONNÉES
DU MESSAGE MSG INSCRITES
DANS MÉMOIRE R A M
N_MSG

FIG.2d.

300

TRANSMISSION À E_ID D'UN
ACQUITTEMENT EN RÉCEPTION
PAR R_ID DE N'_MSG

100

ENVOI PAR E_ID DES
DONNÉES DU MESSAGE MSG DANS
MÉMOIRE NON VOLATILE
N _MSG

200

RÉCEPTION PAR R_ID DES DONNÉES
DU MESSAGE MSG INSCRITES
DANS MÉMOIRE RAM
N_MSG

FIG.2c.

| | MESSAGE MSG |
|---|---|
| DONNÉES | CONTENU DU MESSAGE |
| E_ID | IDENTIFIANT DE L'APPLICATION ÉMETTRICE |
| L_ACK | LISTE D'INFORMATIONS SUR LES APPLICATIONS DESTINATAIRES DE TYPE LID-Dest |
| N_MSG | NUMÉRO D'ORDRE INTERNE A L'INTERFACE |

FIG.3a.

| | TYPE LID_ Dest |
|---|---|
| ID_D | IDENTIFIANT DE L'APPLICATION DESTINATAIRE |
| S_L | ÉTAT DU MESSAGE VIS À VIS DE LA LECTURE PAR L'APPLICATION DESTINATAIRE = STATUT LU OU STATUT NON LU |

FIG.3b.

| DONNÉES | E_ID | L_ACK | N_MSG |
|---|---|---|---|

| $ID\_D_1$ | $S\_L_1$ | $ID\_D_2$ | $S\_L_2$ | $ID\ D_3$ | $S\_L_3$ | $ID\_D_4$ | $S\_L_4$ |
|---|---|---|---|---|---|---|---|

$$[(ID\_D_1;S\_L_1):[(ID\_D_2; S\_L_2):[(ID\_D_3; S\_L_3):[(ID\_D_4; S\_L_4)]]]]$$

FIG.3c.

FIG.3d.

ENTRÉES { R_ID

SORTIE { DONNÉES / S_E

FIG.3e.

200 — LIRE MESSAGE

2001 — EXISTE-IL AU MOINS UN MESSAGE EN MÉMOIRE NON VOLATILE?

NON

OUI

2003 — MESSAGE COURANT=MESSAGE LE PLUS ANCIEN

2004 — R_ID APPARTIENT À LA LISTE DES DESTINATAIRES DE MESSAGE COURANT

OUI

2005 — S_L = STATUT NON LU

NON

NON

2006 — MESSAGE COURANT = DERNIER MESSAGE STOCKÉ EN MÉMOIRE NON VOLATILE?

NON

2007 — MESSAGE COURANT = MESSAGE SUIVANT

200a

2008 — DONNÉES = DONNÉES MESSAGE COURANT

200b

2009 — MISE À JOUR DE S_L LIÉ À R_ID DANS L_ACK      S_L=STATUT LU

2011 — EFFACEMENT DU MESSAGE DE LA MEMOIRE NON VOLATILE

S_E=COMPTE_RENDU DE LA RÉUSSITE DE L'EFFACEMENT

2010 — LES S_L DE CHAQUE MEMBRE DE L_ACK VALENT-ILS TOUS STATUT LU

OUI

NON

2002 — S_E = PAS DE MESSAGE TROUVÉ POUR DESTINATAIRE = R_ID

200c

200d — RETOUR DE DONNÉES

200 e — RETOUR DE S_E

ENTRÉES $\begin{cases} R\_I D \\ N\_MSG \end{cases}$   SORTIES $\begin{cases} M\_A \\ S\_E \end{cases}$

FIG.3f.

300 — | LECTURE _ ACK |

3000 — MESSAGE D'IDENTIFIANT N_ MSG EXISTE ?

NON

OUI

3004 — LECTURE DU MESSAGE EN MÉMOIRE NON VOLATILE
RÉCUPÉRATION DES ÉLÉMENTS DE MESSAGE E_ID ET L_ACK

300a

3005 — E_ID = E_ID L'ID DE L'APPLICATION QUI FAIT LA REQUÊTE EST-IL ID-E ?

NON

3006 — S_E = INFORMATION NON ACCESSIBLE

300b

3001 — N_MSG > N_MSG

NON

OUI

OUI

3007 — R_ID EST-IL ÉLÉMENT DE LA LISTE L_ACK ?

NON

S_E = R_ID NON TROUVE DANS CE MESSAGE — 3008

300c

3002 — S_E = N_MSG NON ENCORE ALLOUÉ

OUI

3009 — S_L = STATUT _LU POUR R _ ID ?

NON

RETOUR DE M_A = VRAI

3003

RETOUR DE M.A = FAUX — 3010

S_E = EXÉCUTION OK — 3011

3012

RETOUR DE S_E

300d

| $Z_1$ | $Z_2$ | $Z_3$ |
|---|---|---|
| APPLICATION I P.M.E (CODE) | APPLICATION II COMMERCE ELECTRONIQUE (CODE) | APPLICATION SANTÉ (CODE |
| DONNÉES | DONNÉES | DONNÉES |
| $ID\_A = ID_1$ | $ID\_A = ID_2$ | $ID\_A = ID_3$ |

MEM NON VOLATILE

INTERFACE COMMUNICATION INTERNE
ENVOI MSG, RÉCEPTION MSG, LECTURE ACK_R, A_INS, A_UNINS

TAB_A

MEM NON VOLATILE OU ROM

INTERPRÉTEUR

REGISTRES

μP

## FIG.4a.

TAB_A

| $ID\_A$ | $O\_V$ |
|---|---|
| $ID_1$ | |
| $ID_2$ | |
| $ID_3$ | |
| | |
| | |

## FIG.4b.

ENTRÉES {   ID_A                    SORTIES {   S_E

400 ——⟶  **A_INS**

4000

AUTORISATION
. PAR OS

NON ⟶

400a

OUI

4001 ——  S_E=APPLICATION
NON AUTORISÉE

4003

ID_A
APPARTIENT À
TAB_A ?

OUI

NON

4004                4005

S_E= APPLICATION
DÉJÀ RÉFÉRENCÉE

ECRITURE DU COUPLE ID_A ET
OV=VRAI DANS LA TABLE TAB_A

STATUT_ERREUR=COMPTE-
RENDU D'EXÉCUTION DE
L'ÉCRITURE

400b

RETOUR S_E ——4002

# FIG. 4c.

FIG.4d. ENTRÉES $\{$ ID_A          SORTIES $\{$ S_E

**500** — A_UNINS

**5001**
S_E=DÉSINSTALLATION NON AUTORISÉE

NON ← **5000** AUTORISATION PAR OS

OUI ↓

**5003** ID_A PRÉSENT DANS LA TABLE DES APPLICATIONS INSTALLÉES?

**5004**
NON →
S_E=APPLICATION NON DÉJÀ RÉFÉRENCÉE

OUI ↓ **5005**

**5006**
NON →
S_E = APPLICATION DÉJÀ DÉSINSTALLÉE

O_V = VRAI ?

OUI ↓

**5007** ID_A = R_ID ET S_L = STATUT NON LU

OUI ↓

**5008** MESSAGE COURANT = PREMIER MESSAGE RÉPONDANT À LA QUESTION CI-DESSUS

MISE À JOUR DE STATUT LECTURE LIÉ À ID_A DANS LA LISTE Dest DE MESSAGE COURANT : S_L = STATUT LU

**5009**
**5010** LES STATUTS LECTURE DE CHAQUE MEMBRE DE LISTEDEST VALENT_ILS TOUS STATUT LU?

NON →

OUI ↓ **5011**

EFFACEMENT DU MESSAGE DE LA MÉMOIRE NON VOLATILE
STATUT ERREUR = COMPTE-RENDU DE LA RÉUSSITE DE L'EFFACEMENT

RETOUR STATUT_ERREUR
**5002**

MISE À JOUR DE L'OCTET DE VALIDATION DANS L'ÉLÉMENT DE LA TABLE (ID_A, OCTET DE VALIDATION = FAUX) EN MÉMOIRE NON VOLATILE
S_E = COMPTE RENDU D'EXÉCUTION DE L'ÉCRITURE
**5012**

**500a**
**500b**
**500c**
**500d**

| ID_A | O_V |
|------|-----|
| ID_A1 | VALIDE |
| ID_A2 | INVALIDE |
| ID_A3 | VALIDE |
| ID_A4 | VALIDE |
|  |  |

FIG.5a. TAB_A

| N_MSG | ID_E | L_ACK | DONNÉES |
|-------|------|-------|---------|
| 38 | ID_A1 | [(ID_A3; NL), (ID_A4; NL)] | x x x x x x x x |

FIG.5b. ENVOI ID_A1 VERS ID_A2, ID_A3, ID_A4

| N_MSG | ID_E | L_ACK | DONNÉES |
|-------|------|-------|---------|
| 38 | ID_A1 | (ID_A3; NL), (ID_A4; LU) | x x x x x x x x |

FIG.5c.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- PROXIES, APPLICATION INTERFACES, AND DISTRIBUTED SYSTEMS. *PROCEEDINGS INTERNATIONAL WORKSHOP ON OBJECT ORIENTATION IN OPERATING SYSTEMS,* 01 Janvier 1992